# EUROPÄISCHE PATENTSCHRIFT

(11) **EP 1 192 191 B1**
(45) Veröffentlichungstag und Bekanntmachung des Hinweises auf die Patenterteilung: **19.02.2003**
(21) Anmeldenummer: 00947861.1
(22) Anmeldetag: 21.06.2000
(51) Int. Cl.: C08F 8/30, C08F 8/34, C08G 85/00

(54) **VERFAHREN ZUR HERSTELLUNG VON KONDENSATIONSVERBINDUNGEN**
METHOD FOR PRODUCING CONDENSATION COMPOUNDS
PROCEDE DE PRODUCTION DE COMPOSES DE CONDENSATION

(30) Priorität: 21.06.1999 DE 19928236
(43) Veröffentlichungstag der Anmeldung: 03.04.2002
(73) Patentinhaber: Dr. Gottschall Instruction Gesellschaft für die Technische Chromatographie mbH, 67059 Ludwigshafen (DE)
(72) Erfinder: GOTTSCHALL, Klaus, D-68542 Heddesheim (DE)
(74) Vertreter: Ricker, Mathias
(86) Internationale Anmeldenummer: EP0005754
(87) Internationale Veröffentlichungsnummer: WO00078825

(56) Entgegenhaltungen:
- EP-A- 0 591 807
- EP-A- 0 698 620
- EP-A- 0 700 933
- CH-A- 606 196
- DE-A- 4 341 524
- FR-A- 2 382 489
- FR-A- 2 526 028
- US-A- 4 076 916
- US-A- 5 582 955

## Beschreibung

Die vorliegende Erfindung betrifft ein Verfahren zur Herstellung von Kondensationsverbindungen, ausgehend von niedermolekularen Verbindungen, die mindestens zwei funktionelle Gruppen aufweisen und die mittels eines Aktivierungsreagenzes aktiviert wurden. Ebenso betrifft die vorliegende Erfindung auch die Verwendung solcher Aktivierungsreagenzien zur Herstellung der Kondensationsverbindungen.

Kondensationsverbindungen wie Polyamide, Polyurethane, Polyester, Polycarbonate oder Polyharnstoffe haben als Massenkunststoffe enorme Bedeutung erlangt. Sie werden dabei unter anderem als Synthesefasern, Formteile, Verpackungsmaterialien oder auch Schaumstoffe eingesetzt. Diese Verbindungen werden normalerweise durch Umsetzung von jeweils zwei zweiwertigen Monomerbausteinen erhalten.

Die Reaktionsbedingungen, unter denen diese Verbindungen hergestellt werden, sind bezüglich der Temperatur und des pH-Wertes in der Regel relativ drastisch. Dies stellt jedoch eine Einschränkung dar, was die Auswahl der Monomere anbelangt, aus denen die Verbindungen aufgebaut werden. Monomere, die empfindlich auf diese drastischen Reaktionsbedingungen reagieren, oder Monomere, die Substituenten tragen, die auf diese drastischen Reaktionsbedingungen empfindlich reagieren, sind schlecht oder überhaupt nicht einsetzbar.

Ein weiterer Nachteil der drastischen Reaktionsbedingungen ist darin zu sehen, daß die Kondensationen in der Regel unselektiv sind. Zusätzliche funktionelle Gruppen einer Monomereinheit führen in diesem Fall zwangsläufig zu unerwünschten Nebenreaktionen.

Eine Aufgabe der vorliegenden Erfindung war es daher, ein Verfahren bereitzustellen, das die angesprochenen Nachteile nicht aufweist.

Demgemäß betrifft die vorliegende Erfindung ein Verfahren zur Herstellung einer Kondensationsverbindung durch Umsetzung mindestens einer funktionellen Gruppe einer mindestens zwei funktionelle Gruppen aufweisenden ersten niedermolekularen Verbindung mit mindestens einer funktionellen Gruppe mindestens einer weiteren, mindestens zwei funktionelle Gruppen aufweisenden zweiten niedermolekularen Verbindung, die gleich der ersten oder verschieden von der ersten niedermolekularen Verbindung sein kann, unter Erhalt einer Kondensationsverbindung, das dadurch gekennzeichnet ist, daß mindestens eine der an dieser Umsetzung beteiligten funktionellen Gruppen vor der Umsetzung durch Reaktion mit einer Verbindung der folgenden Struktur (I) 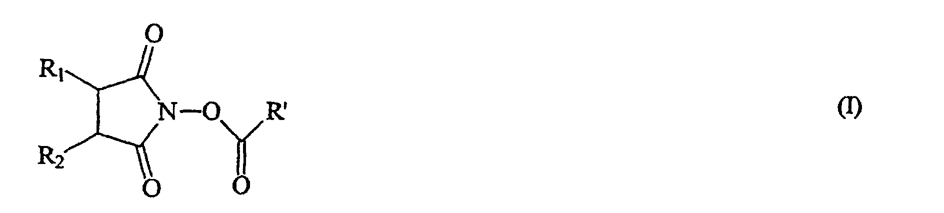 aktiviert wurde, wobei R' für ein Halogenatom oder einen Rest (I') 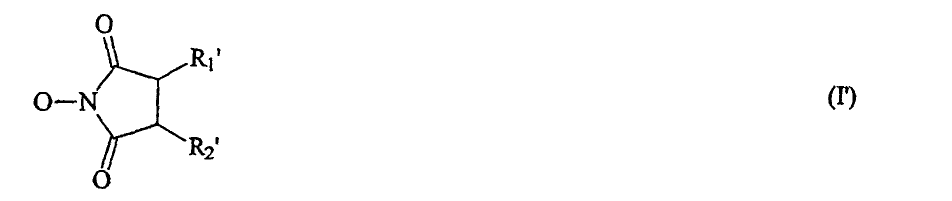 steht und wobei R₁, R₂, R₁' und R₂' gleich oder unterschiedlich sind und Wasserstoff, geradkettige oder verzweigtkettige Alkyl-, Aryl-, Cycloalkyl-, heterocyclische oder Aralkylreste mit bis zu 30 C-Atomen darstellen oder entweder R₁ und R₂ oder R₁' und R₂' oder sowohl R₁ und R₂ als auch R₁' und R₂' zu einem Carbocyclus oder einem Heterocyclus verknüpft sind.

In einer bevorzugten Ausführungsform der vorliegenden Erfindung wird eine Verbindung der allgemeinen Struktur (I) eingesetzt, bei der der Rest R' ein Halogenatom, besonders bevorzugt ein Chloratom ist. Weiter bevorzugt sind bei der verwendeten Verbindung der allgemeinen Struktur (I) die Reste R₁ und R₂ zu einem Carbocyclus verbrückt.

Demgemäß betrifft die vorliegende Erfindung ein Verfahren, wie oben beschrieben, das dadurch gekennzeichnet ist, daß als Verbindung der Struktur (I) eine Verbindung der folgenden Struktur (II) 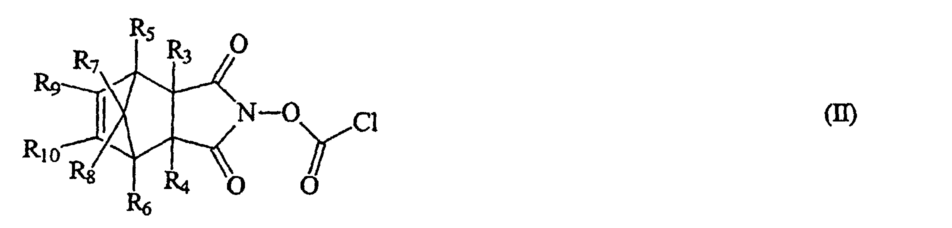 eingesetzt wird, wobei R₃ bis R₁₀ gleich oder unterschiedlich sind und Wasserstoff, geradkettige oder verzweigtkettige Alkyl-, Aryl-, Cycloalkyl-, heterocyclische und Aralkyl-Reste mit bis zu 30 C-Atomen darstellen oder mehrere der R₃ bis R₁₀ zu einem oder mehreren Carbo- oder Heterocyclen verbrückt sind.

Selbstverständlich ist es im Rahmen der vorliegenden Erfindung aber auch möglich, daß R₁ und R₂ so gewählt werden, daß das Brückenkopfatom, an dem in der Struktur (II) die Reste R₇ und R₈ gebunden sind, ein Heteroatom ist. Je nach Art des Heteroatoms ist es hierbei denkbar, daß ein, zwei oder auch mehrere gleiche oder unterschiedliche Reste R₇ bzw. R₈ an dem Brückenkopfatom gebunden sind. Der Brückenkopf kann selbstverständlich auch aus mehreren Heteroatomen oder einer Kombination aus Hetero- und Kohlenstoffatomen gebildet sein, die wiederum gegebenenfalls mit einem oder mehreren Resten der Art R₇ bzw. R₈ substituiert sein können. Weiter sind auch Strukturen denkbar, die statt eines Kohlenstoffatomes, an dem in Struktur (II) die Reste R₃ oder R₆ gebunden sind, ein gegebenenfalls substituiertes Heteroatom aufweisen.

In einer besonders bevorzugten Ausführungsform wird als Verbindung der Struktur (II) die folgende Verbindung der Struktur (III) eingesetzt:

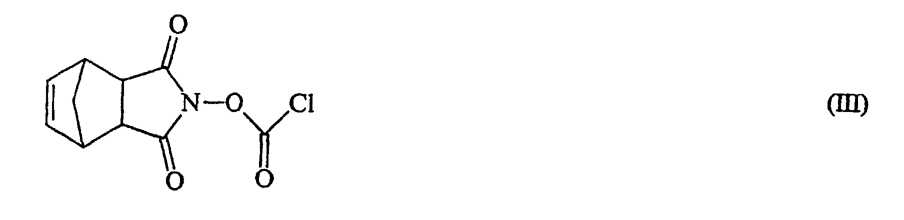

Als Verbindung der allgemeinen Struktur (I), die einen Rest R' der allgemeinen Struktur (I') aufweist, ist insbesondere das symmetrische Carbonat der folgenden Struktur (IV) zu nennen:

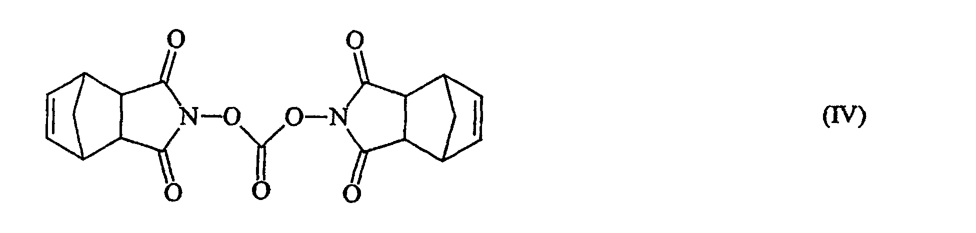

Bezüglich der niedermolekularen, mindestens zwei funktionelle Gruppen aufweisenden Verbindungen, die im erfindungsgemäßen Verfahren umgesetzt werden, bestehen im allgemeinen keine Einschränkungen, solange mindestens eine der funktionellen Gruppen mit mindestens einer Verbindung mit einer der oben genannten Verbindungen der Strukturen (I) bis (IV) aktiviert werden kann.

Der Begriff "niedermolekulare Verbindung", wie er im Rahmen der vorliegenden Erfindung verwendet wird, umfaßt hierbei Verbindungen mit einer Molmasse von weniger als 1000 Dalton. Solche Verbindungen umfassen in der Regel bis zu ungefähr 20 Monomereinheiten.

Der Begriff der "funktionellen Gruppe", wie er im Rahmen der vorliegenden Erfindung verwendet wird, umfaßt alle chemischen Strukturelemente, die miteinander reagieren können oder die durch Umsetzung mit einer Verbindung der Struktur (I) oder (II) hinsichtlich dieser Reaktion aktiviert werden können.

Als bevorzugte funktionelle Gruppen der mindestens zwei funktionelle Gruppen aufweisenden niedermolekularen Verbindungen sind u.a. OH-Gruppen, gegebenenfalls substituierte Amingruppen, SH-Gruppen, OSO₃H-Gruppen, SO₃H-Gruppen, OPO₃H₂-Gruppen, OPO₃HR₁₁-Gruppen, PO₃H₂-Gruppen, PO₃HR₁₁-Gruppen oder COOH-Gruppen zu nennen, wobei die Gruppe R₁₁ so gewählt wird, daß die funktionelle Gruppe an sich mit einer Verbindung der Struktur (I) oder (II) aktiviert werden kann oder mit einer funktionellen Gruppe, die mit einer Verbindung der Struktur (I) oder (II) aktiviert ist, umgesetzt werden kann

Als niedermolekulare, mindestens zwei funktionelle Gruppen aufweisende Verbindungen sind solche denkbar, die funktionelle Gruppen gleicher, vorzugsweise der vorgenannten Art aufweisen. Ebenso sind auch niedermolekulare, mindestens zwei funktionelle Gruppen aufweisende Verbindungen denkbar, die funktionelle Gruppen unterschiedlicher Natur umfassen.

Im folgenden sind Beispiele für niedermolekulare, mindestens zwei funktionelle Gruppen umfassende Verbindungen aufgeführt, bei denen zwei funktionelle Gruppen mit einer Verbindung der Struktur (III) aktiviert sind:

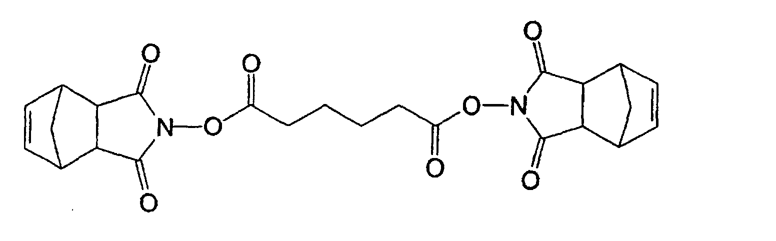

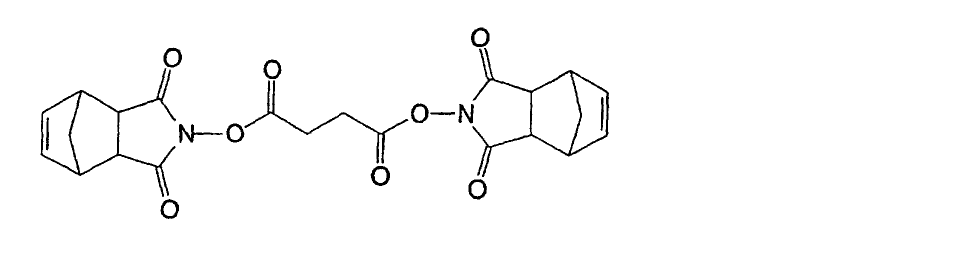

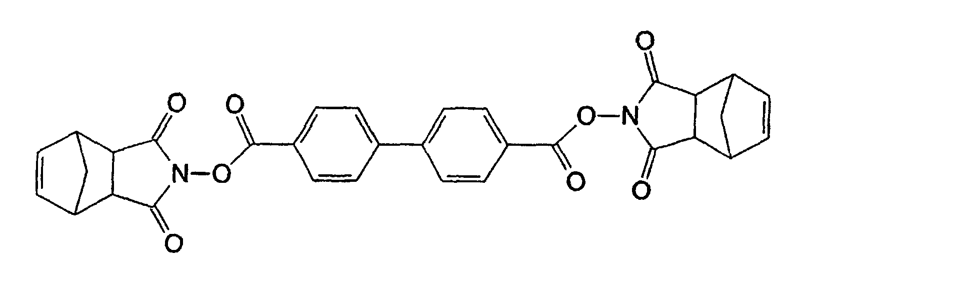

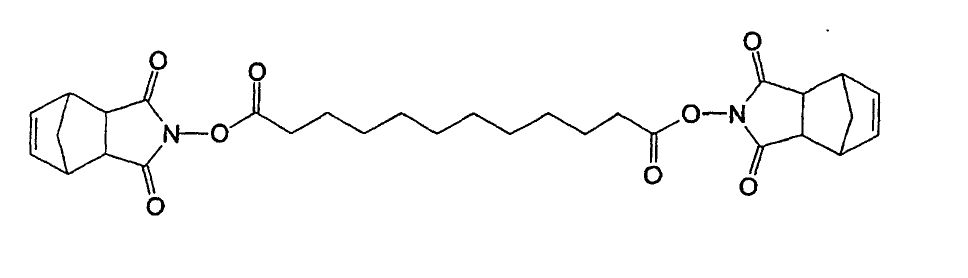

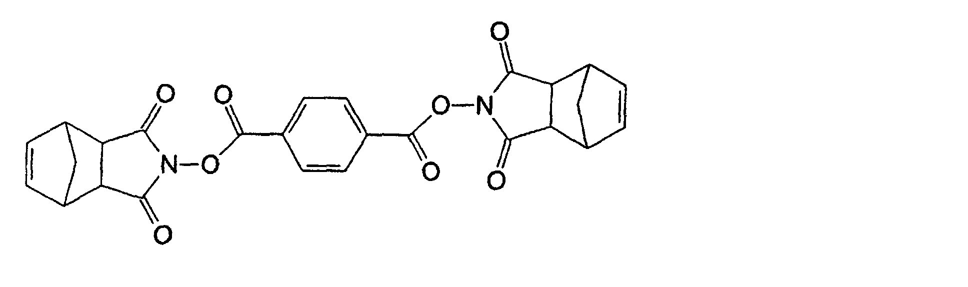

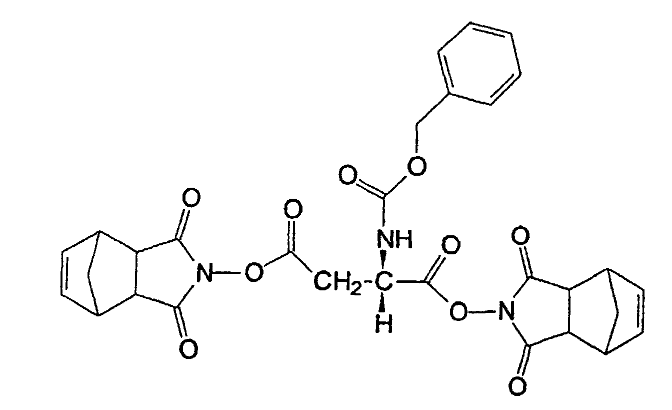

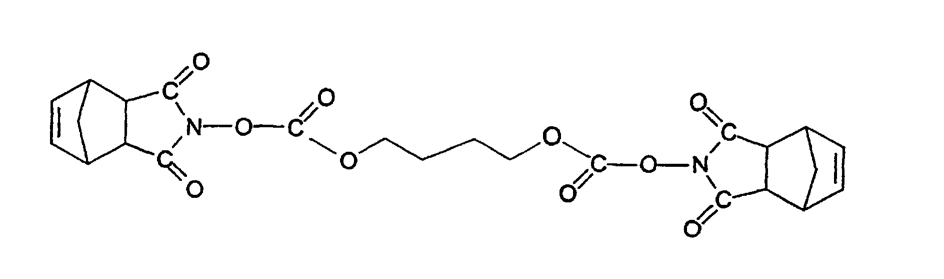

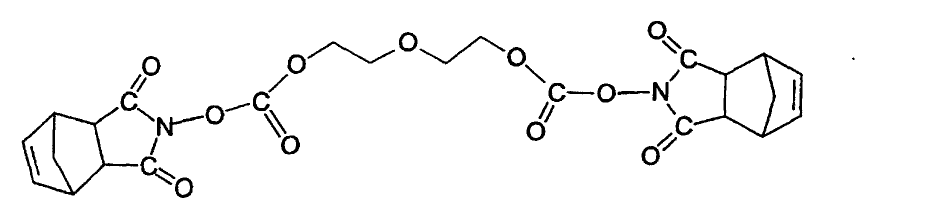

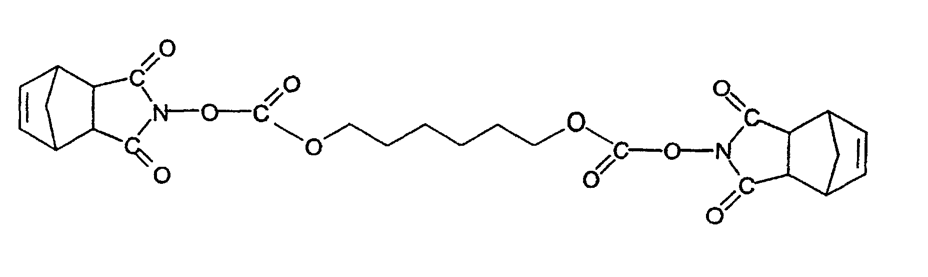

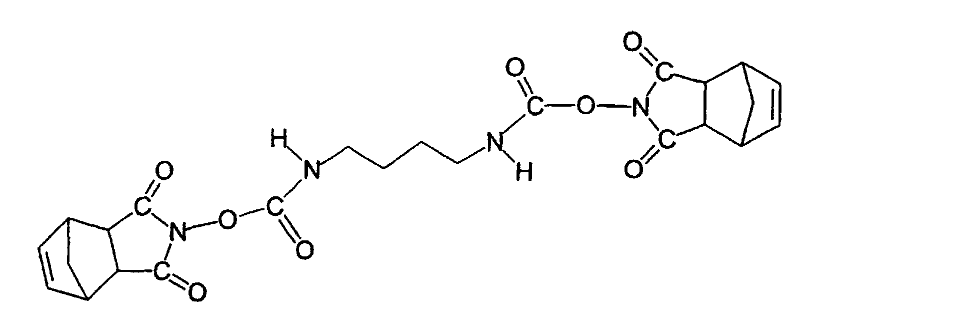

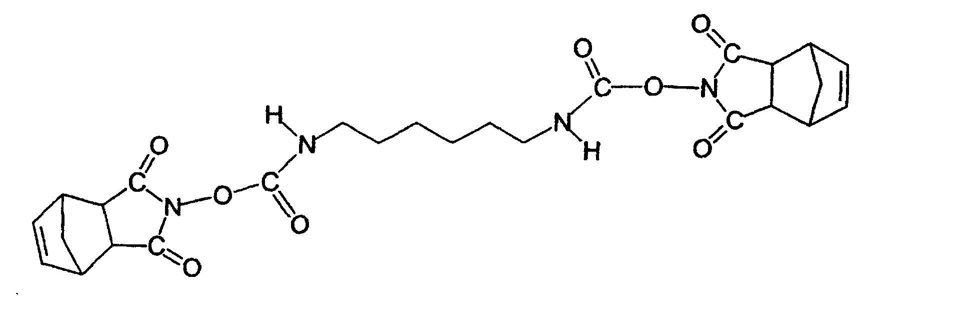

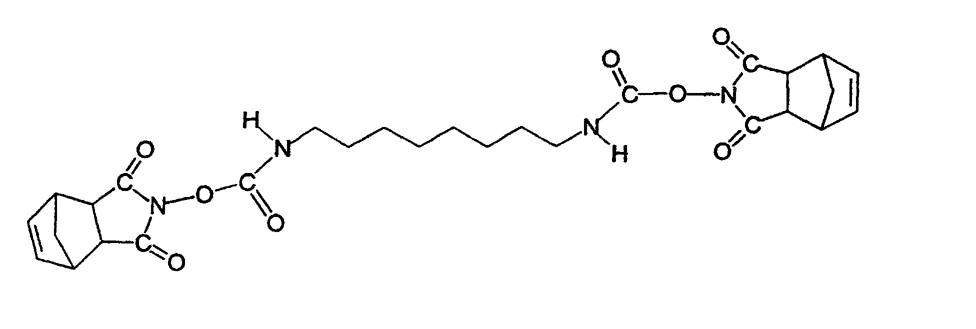

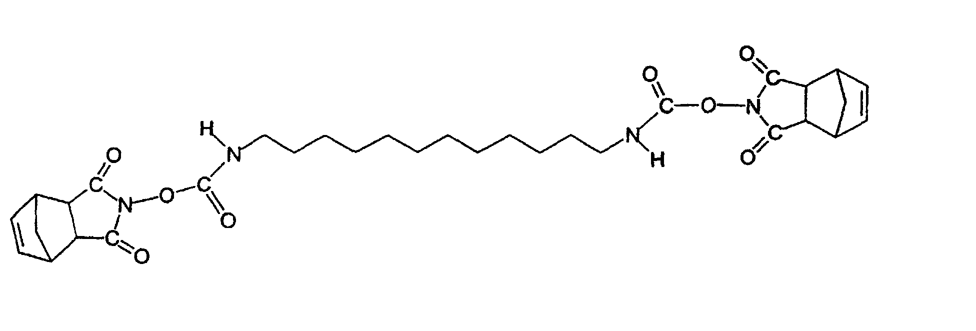

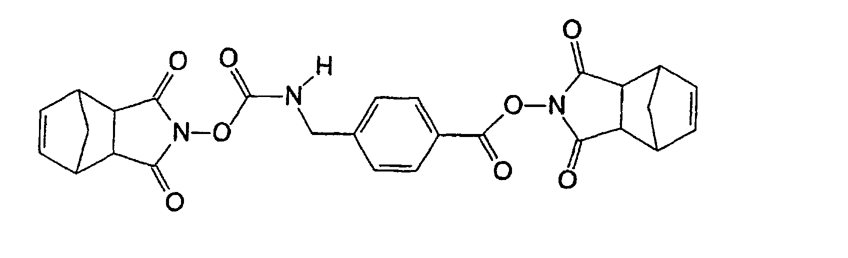

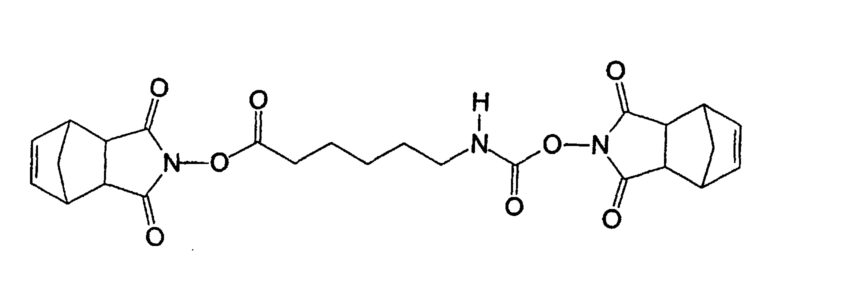

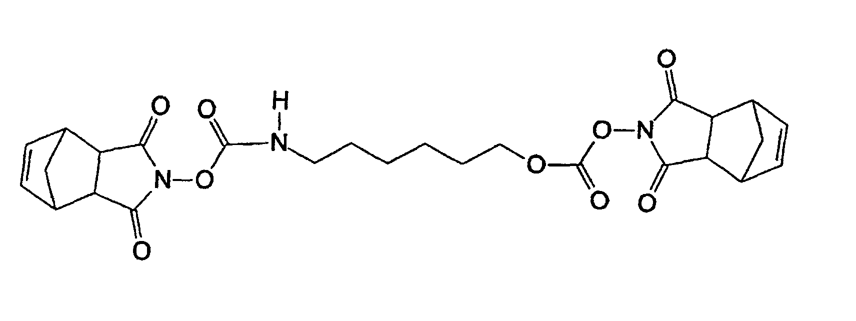

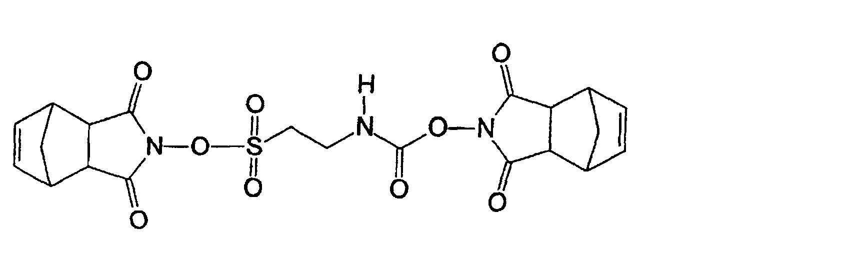

Weitere Beispiele für niedermolekulare Verbindungen sind etwa 1,3,5-Benzoltricarbonsäure, Pentaerythrit, Phloroglucin, 1,3,5-Triaminobenzol, Melamin oder Cyclodextrin.

Weitere Beispiele für niedermolekulare, mindestens zwei funktionelle Gruppen aufweisende Verbindungen sind unter anderem Aminoalkohole, Hydroxycarbonsäuren oder Aminosäuren wie etwa die Verbindung der folgenden Struktur (V) 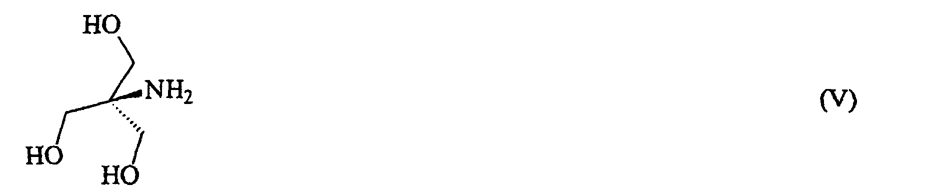 oder die mit der Verbindung der Struktur (III) umgesetzte Verbindung der folgenden Struktur (VI): 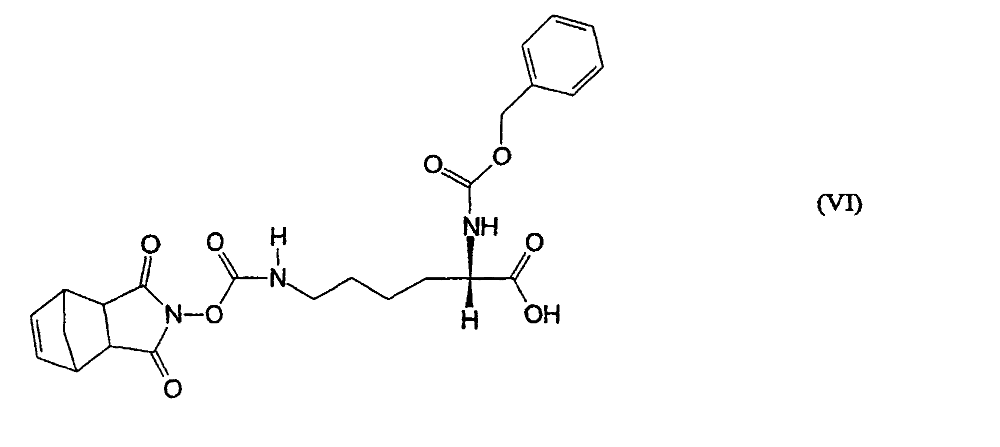 oder 2-Aminoglycerin, Gallussäure, 1-Amino-3,5-dihydroxybenzol, Aminodicarbonsäuren, Diaminocarbonsäuren, Hydroxydicarbonsäuren, Tri- oder Tetracarbonsäuren.

Demgemäß betrifft die vorliegende Erfindung auch ein Verfahren, wie oben beschrieben, das dadurch gekennzeichnet ist, daß mindestens eine der mindestens zwei funktionelle Gruppen aufweisenden Verbindungen mindestens zwei verschiedene funktionelle Gruppen aufweist.

Durch geeignete Wahl der Reaktionsbedingungen bei der Aktivierung der mindestens einen funktionellen Gruppe der mindestens einen, mindestens zwei funktionelle Gruppen aufweisenden niedermolekularen Verbindung mit einer Verbindung der Struktur (I) oder (II) ist es im Rahmen des erfindungsgemäßen Verfahrens denkbar, daß sämtliche funktionelle Gruppen einer niedermolekularen Verbindung aktiviert werden und mit nicht-aktivierten funktionellen Gruppen mindestens einer weiteren, mindestens zwei funktionelle Gruppen aufweisenden Verbindung umgesetzt werden. Dies ist sowohl denkbar für niedermolekulare Verbindungen, die nur eine Art von funktionellen Gruppen aufweisen, als auch für solche, die zwei oder mehr verschiedene Arten von funktionellen Gruppen umfassen.

Im Rahmen des erfindungsgemäßen Verfahrens ist es insbesondere möglich, eine oder mehrere funktionelle Gruppen einer niedermolekularen Verbindung selektiv zu aktivieren. Außerdem ist es denkbar, daß die niedermolekulare Verbindung nur eine Art von funktionellen Gruppen aufweist und von diesen funktionellen Gruppen nur eine bestimmte Auswahl selektiv aktiviert wird.

Bevorzugt werden im erfindungsgemäßen Verfahren niedermolekulare Verbindungen eingesetzt, die zwei oder mehr verschiedene funktionelle Gruppen aufweisen, von denen mindestens eine bei der Umsetzung der Verbindung mit einer Verbindung der Struktur (I) oder (II) selektiv aktiviert wird. Als Beispiel unter vielen denkbaren Verbindungen, die aus der Umsetzung von niedermolekularen, zwei oder mehr verschiedene funktionelle Gruppen aufweisenden Verbindungen mit einer der Verbindungen (I) oder (II) resultieren, sei die Verbindung der folgenden Struktur (VII) genannt:

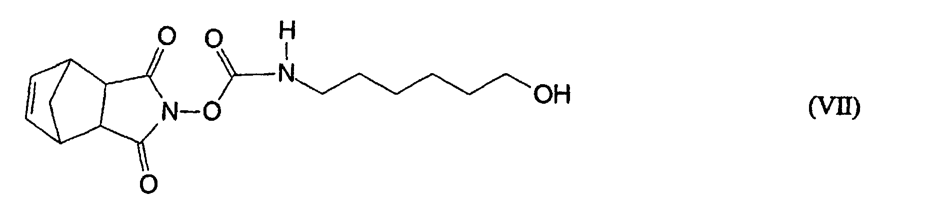

Die vorliegenden Erfindung betrifft demnach auch ein Verfahren, wie oben beschrieben, das dadurch gekennzeichnet ist, daß mindestens eine der mindestens zwei verschiedenen funktionellen Gruppen der mindestens einen, mindestens zwei funktionelle Gruppen aufweisenden Verbindungen selektiv durch eine Verbindung der Struktur (I) oder (II) aktiviert wurde.

Hierbei gibt es im Rahmen des erfindungsgemäßen Verfahrens zahlreiche Möglichkeiten, die selektive Aktivierung der funktionellen Gruppen zu erreichen. So ist es beispielsweise denkbar, durch die geeignete Wahl des Lösungsmittels oder der Lösungsmittel, in dem oder in denen die Aktivierung durchgeführt wird, die Selektivität zu erreichen. Ebenso ist es denkbar, durch die spezifische Wahl von Reaktionstemperatur, Reaktionsdruck oder pH-Wert, bei dem die Reaktion durchgeführt wird, die Selektivität einzustellen. Eine weitere Möglichkeit, eine gewünschte Selektivität einzustellen, ist die geeignete Wahl des Aktivierungsreagenzes der Struktur (I) oder (II). Hierbei kann die unterschiedliche Reaktivität und/oder Selektivität einer oder mehrerer verschiedener funktioneller Gruppen gegenüber einem oder mehreren verschiedenen Aktivierungsreagenzien ausgenutzt werden. Selbstverständlich ist es im Rahmen des erfindungsgemäßen Verfahrens möglich, durch geeignete Kombination der genannten Möglichkeiten eine selektive Aktivierung von funktionellen Gruppen zu erreichen.

Die zwei oder mehr im erfindungsgemäßen Verfahren miteinander umgesetzten niedermolekularen Verbindungen können gleich oder verschieden voneinander sein.

Insbesondere ist es beispielsweise denkbar, nur eine Art von niedermolekularen Verbindungen einzusetzen, die beispielsweise zwei verschiedene Arten von funktionellen Gruppen aufweisen, von denen wiederum eine selektiv aktiviert wurde. In diesem Fall reagieren beispielsweise bei der Umsetzung die aktivierten Gruppen der niedermolekularen Verbindung mit den nicht-aktivierten funktionellen Gruppen dieser Verbindung.

Weiter ist es denkbar, zwei verschiedene niedermolekulare Verbindung einzusetzen, die jeweils nur eine Art von funktionellen Gruppen aufweisen. In diesem Fall ist es beispielsweise möglich, die funktionellen Gruppen der einen Verbindung mit einer Verbindung der Struktur (I) oder (II) zu aktivieren und mit den nicht-aktivierten funktionellen Gruppen der anderen Verbindung umzusetzen.

Selbstverständlich ist es im erfindungsgemäßen Verfahren auch möglich, mehr als zwei verschiedene niedermolekulare Verbindungen einzusetzen und durch geeignete Verfahrensführung mittels geeigneter, gegebenenfalls selektiver Aktivierung von funktionellen Gruppen der verschiedenen Verbindungen eine im wesentlichen unbeschränkte Vielzahl von Kondensationsverbindungen herzustellen.

Weiter können im erfindungsgemäßen Verfahren auch Kondensationsverbindungen mit weitgehend beliebigen Kondensationsgraden hergestellt werden. Demgemäß können im erfindungsgemäßen Verfahren Oligokondensationsverbindungen und/oder Polykondensationsverbindungen aufgebaut werden. Der Begriff der "Kondensationsverbindung", wie er in der vorliegenden Erfindung verwendet wird, bezeichnet deshalb Kondensationsverbindungen, die aus mindestens zwei niedermolekularen Verbindungen aufgebaut wurden.

Das erfindungsgemäße Verfahren ist dabei nicht beschränkt auf den ausschließlichen Einsatz von niedermolekularen, mindestens zwei funktionelle Gruppen aufweisenden Verbindungen. Es ist selbstverständlich auch möglich, zusätzlich zu den mindestens zwei niedermolekularen, mindestens zwei funktionelle Gruppen aufweisenden Verbindungen, die erfindungsgemäß miteinander umgesetzt werden, auch mindestens eine nicht-niedermolekulare Verbindung, die mindestens eine funktionelle Gruppe aufweisen, und/oder mindestens eine niedermolekulare Verbindung, die eine funktionelle Gruppe aufweist, einzusetzen. Der Begriff "nichtniedermolekulare Verbindung" umfaßt hierbei Verbindungen mit einer Molmasse von größer oder gleich 1000 Dalton.

Das erfindungsgemäße Verfahren ist weiterhin nicht beschränkt auf den Einsatz der Aktivierungsreagenzien der Strukturen (I) oder (II). So ist es beispielsweise denkbar, daß in mindestens einem Schritt erfindungsgemäß zwei jeweils mindestens zwei funktionelle Gruppen aufweisenden Verbindungen miteinander umgesetzt werden und in einem oder mehreren weiteren Schritten die Aktivierung von funktionellen Gruppen zum Aufbau der Kondensationsverbindung mittels anderer Aktivierungsreagenzien erfolgt. Selbstverständlich ist es auch denkbar, daß in einem oder mehreren Schritten beim Aufbau der Kondensationsverbindung zwei funktionelle Gruppen ohne Verwendung eines Aktivierungsreagenzes miteinander umgesetzt werden.

Die spezielle Ausgestaltung der Verfahrensführung beim Aufbau der Kondensationsverbindung unterliegt im wesentlichen keinen Einschränkungen und ist prinzipiell nach allen denkbaren Methoden möglich.

Eine besondere Ausführungsform der vorliegenden Erfindung betrifft ein Verfahren, wie oben beschrieben, das dadurch gekennzeichnet ist, daß die Kondensationsverbindung durch gleichzeitiges Abreagieren der mindestens zwei funktionelle Gruppen aufweisenden niedermolekularen Verbindungen hergestellt wird.

Im Rahmen des erfindungsgemäßen Verfahrens ist es auch denkbar, daß in diesem Eintopfverfahren eine oder mehrere erfindungsgemäß hergestellte Kondensationsverbindungen mit mindestens einer weiteren, mindestens eine funktionelle Gruppe aufweisenden, niedermolekularen und/oder nicht-niedermolekularen Verbindung umgesetzt werden.

Weiter ist es beispielsweise denkbar, daß die zur Umsetzung verwendeten niedermolekularen und/oder nicht-niedermolekularen Verbindungen bereits in aktivierter Form zusammengegeben werden. Ebenso ist es auch denkbar, die niedermolekularen oder nicht-niedermolekularen Verbindungen in nicht-aktivierter Form zusammenzugeben und die Aktivierung mittels einer Verbindung der Struktur (I) oder (II) im Reaktionsgefäß direkt vorzunehmen.

Im Falle, daß mindestens zwei verschiedene Verbindungen miteinander umgesetzt werden, entstehen beispielsweise statistische Kondensationsverbindungen.

Eine weitere Ausführungsform der vorliegenden Erfindung betrifft ein Verfahren, wie oben beschrieben, das dadurch gekennzeichnet ist, daß die Kondensationsverbindung schrittweise aus den mindestens zwei funktionelle Gruppen aufweisenden niedermolekularen Verbindungen aufgebaut wird.

Der schrittweise Aufbau ist hierbei prinzipiell nach allen denkbaren Verfahren gemäß dem Stand der Technik durchführbar. Bevorzugt erfolgt jedoch der schrittweise Aufbau in Lösung oder am festen Träger.

In einer weiteren Ausführungsform betrifft daher die vorliegende Erfindung ein Verfahren, das dadurch gekennzeichnet ist, daß die schrittweise Herstellung der Kondensationsverbindung in Lösung oder am festen Träger durchgeführt wird.

Wird die Kondensationsverbindung am festen Träger aufgebaut, so ist es im Rahmen des erfindungsgemäßen Verfahrens beispielsweise denkbar, zuerst mindestens eine Kondensationsverbindung durch Umsetzung von mindestens zwei niedermolekularen, mindestens zwei funktionelle Gruppen aufweisenden Verbindungen erfindungsgemäß herzustellen, die resultierende mindestens eine Kondensationsverbindung über ionische oder/und adsorptive oder/und kovalente Bindung am Träger zu fixieren und die am Träger fixierte mindestens eine Kondensationsverbindung über mindestens eine freie, gegebenenfalls aktivierte funktionelle Gruppe durch weitere Umsetzung mit mindestens einer Verbindung, die mindestens eine funktionelle, gegebenenfalls aktivierte Gruppe aufweist, weiter aufzubauen.

Ebenfalls ist es möglich, zuerst mindestens eine niedermolekulare oder nicht-niedermolekulare, mindestens zwei funktionelle Gruppen aufweisende Verbindung über ionische oder/und adsorptive oder/und kovalente Bindung am Träger zu fixieren und anschließend durch weitere Umsetzungen an mindestens einer gegebenenfalls aktivierten funktionellen Gruppe der am Träger fixierten niedermolekularen Verbindung die Kondensationsverbindung aufzubauen, wobei in mindestens einem Schritt beim schrittweisen Aufbau eine erfindungsgemäß hergestellte Kondensationsverbindung eingesetzt wird.

Im Rahmen des erfindungsgemäßen Verfahrens ist es auch denkbar, diese beiden Reaktionswege beliebig zu kombinieren.

Als Trägermaterial sind prinzipiell alle Materialien geeignet, an denen sich, wie oben beschrieben, die mindestens eine Kondensationsverbindung und/oder die niedermolekulare Verbindung durch ionische oder/und adsorptive oder/und kovalente Bindung fixieren läßt und sich die in gewünschtem Umfang aufgebaute Kondensationsverbindung ohne Zerstörung der Struktur der Kondensationsverbindung ablösen läßt.

Im Rahmen des erfindungsgemäßen Verfahrens ist es hierbei beispielsweise denkbar, daß der Träger den Aufbau der Kondensationsverbindung nicht beeinflußt. Ebenso ist auch denkbar, daß die chemische Natur und die Topologie des Trägers dazu verwendet wird, aufgrund von beispielsweise elektronischer oder sterischer Wechselwirkungen den Aufbau der Kondensationsverbindung beispielsweise regio-, stereo- oder enantioselektiv zu beeinflussen.

Als Beispiele seien etwa poröse und nicht-poröse Harze, Titandioxid, Kieselgel, Cellulose, Glasbeads, Metall-, Kunststoff-, Keramik- oder Glasoberflächen genannt.

Bezüglich der Löslichkeit des Trägers im gewählten Lösungsmittel oder Lösungsmittelgemisch ist es denkbar, daß das Trägermaterial löslich oder unlöslich ist. Demgemäß ist es im Rahmen des erfindungsgemäßen Verfahrens denkbar, daß der schrittweise Aufbau der Kondensationsverbindung am Träger in Lösung, in disperser Phase oder in Emulsion erfolgt.

Weiter ist es möglich, daß sich im Laufe des schrittweisen Aufbaus der Kondensationsverbindung am Träger die Löslichkeit des Träger-Kondensationsverbindungs-Komplexes im gewählten Lösungsmittel oder Lösungsmittelgemisch verändert. Demgemäß ist es beispielsweise denkbar, im Laufe des schrittweisen Aufbaus die Lösungsmittelzusammensetzung zu ändern, um die erwünschten Löslichkeiten zu gewährleisten. Selbstverständlich ist es weiter denkbar, zwei oder mehr voneinander verschiedene Trägermaterialien einzusetzen, die sich in ihrer Löslichkeit in dem gewählten Lösungsmittel oder Lösungsmittelgemisch unterscheiden.

In einer weiteren denkbaren Ausführungsform des erfindungsgemäßen Verfahrens kann nach einer beliebigen Anzahl von Schritten der Träger-Kondensationsverbindungs-Komplex isoliert werden und in mindestens einer weiteren Stufe anschließend im gleichen bzw. in einem anderen Lösungsmittel bzw. Lösungsmittelgemisch weiter umgesetzt werden.

Ebenso kann der schrittweise Aufbau der Kondensationsverbindung in Lösung ohne Verwendung eines Trägers durchgeführt werden.

Ebenso wie bei der schrittweisen Herstellung der Kondensationsverbindung am Träger ist es denkbar, daß die Herstellung der Kondensationsverbindung in Lösung ohne Träger, je nach umzusetzender Verbindungen und gewähltem Lösungsmittel oder Lösungsmittelgemisch, in homogener Lösung oder in Dispersion oder in Emulsion durchgeführt wird.

Beim schrittweisen Aufbau der Kondensationsverbindung in Lösung ohne Träger ist es im Rahmen des erfindungsgemäßen Verfahrens beispielsweise denkbar, zuerst eine Kondensationsverbindung aus zwei niedermolekularen, mindestens zwei funktionelle Gruppen aufweisenden Verbindungen herzustellen und anschließend diese Kondensationsverbindung sukzessive durch Umsetzung mit jeweils einer weiteren niedermolekularen oder nicht-niedermolekularen, mindestens zwei funktionelle Gruppen aufweisenden Verbindung aufzubauen. Bei jedem Schritt erfolgt hierbei die Ankondensation mindestens einer niedermolekularen Verbindung oder nicht-niedermolekularen Verbindung an die Kondensationsverbindung aus dem vorangegangenen Schritt, wobei bei der Ankondensation mindestens eine funktionelle Gruppe der Kondensationsverbindung mit einer funktionellen Gruppe einer niedermolekularen Verbindung reagiert und wobei gegebenenfalls eine der beiden miteinander reagierenden funktionellen Gruppen vor der Umsetzung aktiviert wurde.

Insbesondere ist es beispielsweise denkbar, als nicht-niedermoleklulare Verbindung ein erfindungsgemäß hergestelltes Oligo- oder Polykondensationsprodukt einzusetzen. Ebenso ist es auch denkbar, beliebige Oligomere oder Polymere, die eine geeignete Art und Anzahl funktioneller Gruppen aufweisen, als nicht-niedermolekulare Verbindung einzusetzen

Hinsichtlich der einsetzbaren Lösungsmittel oder Lösungsmittelgemische existieren prinzipiell keine Einschränkungen. Zu beachten ist nur, daß das erfindungsgemäße Verfahren im gewählten Lösungsmittel oder Lösungsmittelgemisch durchführbar ist. In einer bevorzugten Ausführungsform des erfindungsgemäßen Verfahrens werden hierbei Lösungsmittelgemische eingesetzt, besonders bevorzugt Lösungsmittelgemische, die als eine Komponente Wasser aufweisen.

Demgemäß betrifft die vorliegende Erfindung auch ein Verfahren, wie oben beschrieben, das dadurch gekennzeichnet ist, daß es bei Temperaturen im Bereich von -10 °C bis +50 °C in mindestens einem wäßrigen Lösungsmittelgemisch durchgeführt wird.

Im Rahmen des erfindungsgemäßen Verfahrens ist es auch denkbar, die oben beschriebenen Methoden zum Aufbau der Kondensationsverbindung in geeigneter Weise zu kombinieren.

Vorzugsweise können niedermolekulare Verbindungen, die funktionsspezifische Reste oder Gruppen tragen, linear oder flächig oder dreidimensional zwischen niedermolekulare oder nicht-niedermolekulare Blöcke einkondensiert werden. Als funktionsspezifische Reste oder Gruppen seien unter anderem Chromophore, Fluorophore, Sensoren, Rezeptoren oder Indikatoren genannt. Außerdem können z.B. optisch aktive Reste, Gruppen, die einen flüssig-kristallinen Charakter einbringen, oder Gruppen mit Leiter- oder Halbleitereigenschaften eingeführt werden.

Entsprechend der oben beschriebenen Möglichkeiten, Oligo- und/oder Polykondensationsverbindungen aufzubauen, ist es denkbar, im Rahmen des erfindungsgemäßen Verfahrens bei Verwendung einer einzigen niedermolekularen Verbindung Homo-Oligokondensate oder Homo-Polykondensate herzustellen. Bei Verwendung unterschiedlicher Verbindungen sind auch Co-Oligo- oder Polykondensate, statistische Co-Oligo- oder Polykondensate, Block-Co-Oligo- oder Polykondensate oder auch definierte Primär- und Sekundärstrukturen herstellbar. Hierbei ist es möglich, unter Ausnutzung der unterschiedlichen Reaktivität und Selektivität der an der Aktivierung bzw. der Umsetzung beteiligten funktionellen Gruppen die Reihenfolge und die Art der Bindungsschritte zu steuern.

Bei entsprechender Verwendung und Kombination von Verbindungen, die zwei oder mehr als zwei funktionelle Gruppen aufweisen, ist es möglich, durch geeignete Aktivierungs- und Kondensationsschritte ein-, zwei- und/oder dreidimensionale Strukturen aufzubauen.

Demgemäß betrifft die vorliegende Erfindung auch die Verwendung einer Verbindung der folgenden Struktur (I) 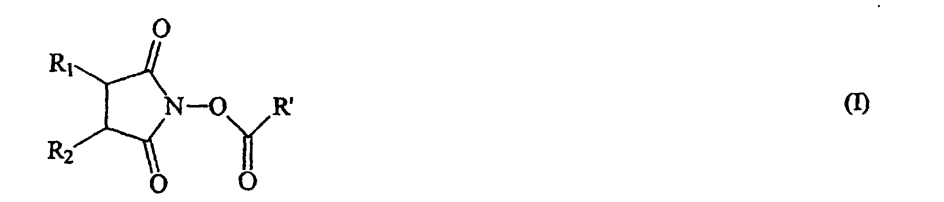 wobei R' für ein Halogenatom oder einen Rest (I') 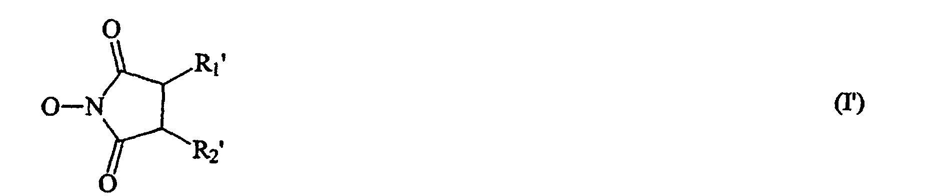 steht und wobei R₁, R₂, R₁' und R₂' gleich oder unterschiedlich sind und Wasserstoff, geradkettige oder verzweigtkettige Alkyl-, Aryl-, Cycloalkyl-, heterocyclische oder Aralkylreste mit bis zu 30 C-Atomen darstellen oder entweder R₁ und R₂ oder R₁' und R₂' oder sowohl R₁ und R₂ als auch R₁' und R₂' zu einem Carbocyclus oder einem Heterocyclus verknüpft sind, oder einer Verbindung der folgenden Struktur (II) 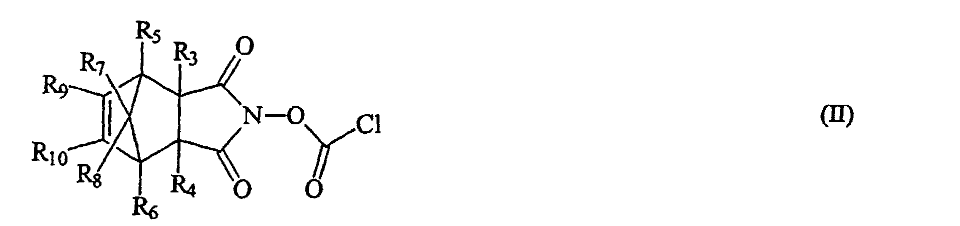 wobei R₃ bis R₁₀ gleich oder unterschiedlich sind und Wasserstoff, geradkettige oder verzweigtkettige Alkyl-, Aryl-, Cycloalkyl-, heterocyclische und Aralkyl-Reste mit bis zu 30 C-Atomen darstellen oder mehrere der R₃ bis R₁₀ zu einem oder mehreren Carbo- oder Heterocyclen verbrückt sind, zur Herstellung von ein-, zwei- und/oder dreidimensionalen Kondensationsverbindungen.

Beim Aufbau dieser Verbindungen können nach dem erfindungsgemäßen Verfahren gemäß den oben genannten Verbindungen der Strukturen (I) oder (II) und der ebenfalls oben genannten verschiedenen funktionellen Gruppen unter anderem Ester-, Amid-, Carbonat-, Hydrazid-, Urethan- oder Harnstoffbindungen geknüpft werden. Außerdem können die Stickstoffhomologen oder Thioanalogen dieser Verbindungen wie etwa Semicarbazide oder Hydroxamether gebildet werden.

Daher betrifft die vorliegende Erfindung auch die Verwendung, wie oben beschrieben, die dadurch gekennzeichnet ist, daß die ein-, zwei- und/oder dreidimensionalen Kondensationsverbindungen durch Knüpfung von Ester-, Amid-, Carbonat-, Hydrazid-, Urethan- oder Harnstoffbindungen oder durch Knüpfung von thioanalogen oder stickstoffhomologen Bindungen gebildet werden.

Ein besonderer Vorteil des erfindungsgemäßen Verfahrens ist darin zu sehen, daß auch niedermolekulare Verbindungen, die Substituenten tragen, die auf drastische Reaktionsbedingungen empfindlich reagieren, zum Aufbau der Oligo- oder Kondensationsprodukte eingesetzt werden können, da die Herstellbedingungen dieser Kondensationsverbindungen, im Unterschied zu den Verfahren gemäß dem Stand der Technik, weniger drastisch sind.

Demgemäß betrifft die vorliegende Erfindung ein Verfahren, wie oben beschrieben, das dadurch gekennzeichnet ist, daß die Umsetzungen der mindestens zwei funktionelle Gruppen aufweisenden niedermolekularen Verbindungen bei einem pH-Wert im Bereich von 3 bis 14 und einer Temperatur im Bereich von -30 °C bis +70 °C durchgeführt werden.

In einer besonders bevorzugten Ausführungsform wird in einem pH-Wert im Bereich von 4 bis 14 und bei einer Temperatur im Bereich von -15 °C bis +50 °C gearbeitet.

Nach dem erfindungsgemäßen Verfahren können durch Verwendung von Verbindungen, die zwei und mehr funktionelle Gruppen aufweisen, Stempolymere, Dendrone und Dendrimere hergestellt werden. Hierbei sind unter anderem sowohl divergente als auch konvergente Synthesestrategien möglich.

Bei der divergenten Synthese wird in einer speziellen Ausführungsform des erfindungsgemäßen Verfahrens ein mehrfunktionales Reagenz wie beispielsweise ein Reagenz der Struktur (V), das mit einer Verbindung der Struktur (I) oder (II) beispielsweise einfach aktiviert ist, mit beispielsweise den Hydroxygruppen eines multifunktionalen Kerns umgesetzt. In einem nächsten Schritt wird in einer Ausführungsform des erfindungsgemäßen Verfahrens das Umsetzungsprodukt an freien funktionellen Gruppen mit einer Verbindung der Struktur (I) oder (II) aktiviert und dann mit einem oder mehreren geeigneten multifunktionalen Reagenzien umgesetzt. In einer bevorzugten Ausführungsform des erfindungsgemäßen Verfahrens wird in diesem nächsten Schritt das Umsetzungsprodukt mit einem oder mehreren geeigneten multifunktionalen Reagenzien, die mit einer Verbindung der Struktur (I) oder (II) aktiviert wurden, umgesetzt.

In einer weiteren speziellen Ausführungsform des erfindungsgemäßen Verfahrens hinsichtlich der divergenten Synthese werden die Hydroxygruppen eines multifunktionalen Kerns beispielsweise eines mehrwertigen Alkohols, beispielsweise Glycerin, mittels einer Verbindung der Struktur (I) oder (II) aktiviert. In einem nächsten Schritt werden die aktivierten Hydroxygruppen mit den Aminogruppen beispielsweise eines Aminoalkohols beispielsweise der Struktur (V) selektiv zum Urethan umgesetzt. In weiteren Schritten werden dann jeweils die Hydroxygruppen der Kondensationsverbindung aktiviert und mit den Aminogruppen eines Aminoalkohols zum Urethan umgesetzt. Über die Anzahl der Hydroxygruppen des Kerns und der in diesen weiteren Schritten eingesetzten Reagenzien kann hierbei der Verzweigungsgrad gesteuert werden.

Beispielhaft seien unter anderem die folgenden Schritte eines Synthesewegs für einen Dendrimeraufbau dargestellt: 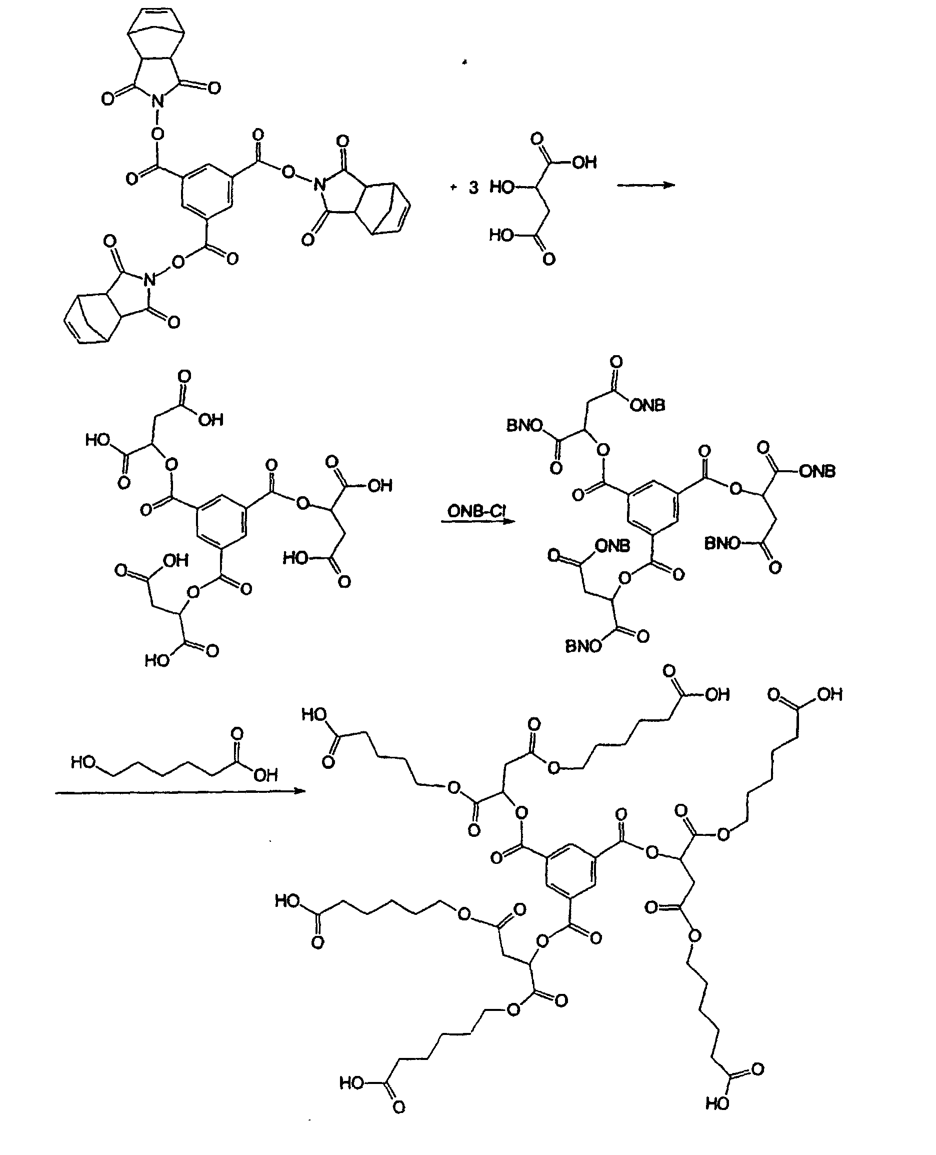 Demgemäß betrifft die vorliegende Erfindung auch eine Verwendung, wie oben beschrieben, die dadurch gekennzeichnet ist, daß es sich bei den Kondensationsverbindungen um Stempolymere, Dendrimere oder Dendrone handelt.

Bei der konvergenten Synthese wird in einer speziellen Ausführungsform des erfindungsgemäßen Verfahrens beispielsweise eine Hydroxydicarbonsäure selektiv C-terminal mit einer Verbindung der Strukturen (I) oder (II) aktiviert, woraufhin mit beispielsweise Aminodicarbonsäuren eine Kondensationsverbindung sukzessive bis zum gewünschten Derivatisierungsgrad aufgebaut wird. Die erhaltene Kondensationsverbindung, ein Dendron, kann dann beispielsweise mit einer aktivierten Tri- oder Tetracarbonsäure umgesetzt werden.

Als Beispiele für Kerne, die sich zur Herstellung für Sternpolymere oder Dendrimere eignen, seien unter anderem 1,3,5-Benzoltricarbonsäure, Pentaerythrit, Phloroglucin, 1,3,5-Triaminobenzol, Melamin oder auch Cyclodextrine geeignet.

Über das erfindungsgemäße Verfahren können bei der Herstellung der Sternpolymere, Dendrone und Dendrimere über Kondensationsreaktionen sämtliche oben beschriebenen Bindungstypen realisiert werden.

Ein weiterer Vorteil des erfindungsgemäßen Verfahrens ist unter anderem darin zu sehen, daß die Verbindungen, aus denen die Oligo- oder Kondensationsverbindungen aufgebaut werden, zusätzlich zu den funktionellen Gruppen, die zum Aufbau verwendet werden, zusätzlich weitere funktionelle Gruppen tragen können, d.h. im wesentlichen beliebig substituiert sein können.

Hierbei ist es unter anderem denkbar, daß diese weiteren funktionellen Gruppen während des Aufbaus der Kondensationsverbindung gegebenenfalls durch eine geeignete Schutzgruppe geschützt sind. Hierfür sind im wesentlichen alle bekannten Schutzgruppen gemäß des Standes der Technik verwendbar.

Im Anschluß an die Oligo- oder Polykondensation kann die hergestellte Kondensationsverbindung an diesen funktionellen Gruppen derivatisiert werden, wobei im Falle, daß die funktionellen Gruppen mit Schutzgruppen versehen waren, diese zunächst mittels eines geeigneten Verfahrens nach dem Stand der Technik entfernt werden. Bezüglich dieser Derivatisierung ist es beispielsweise denkbar, die funktionellen Gruppen der Kondensationsverbindung mit einem Aktivierungsreagens, bevorzugt mit einer Verbindung der Struktur (I) oder (II) zu aktivieren und anschließend mit Verbindungen, die mindestens eine funktionelle Gruppe aufweisen, umzusetzen. Ebenso ist auch denkbar, aktivierte, mindestens eine funktionelle Gruppe aufweisende Verbindungen mit den funktionellen Gruppen der Kondensationsverbindung umzusetzen.

In einer weiteren Ausführungsform der vorliegenden Erfindung ist es möglich, gleichartige oligomere oder polymere Kondensationszwischenprodukte, die jeweils mindestens eine funktionelle Gruppe aufweisen, die nicht zum Aufbau der Kondensationsverbindung verwendet wird, in geeigneter Weise zu derivatisieren und anschließend zu einer Kondensationsverbindung zusammenzufügen. Die Kondensationszwischenprodukte können dabei entweder mit einer einzigen oder auch verschiedenen Verbindungen derivatisiert werden. Die Verbindungen, mit denen derivatisiert wird, können beispielsweise als Gemisch angeboten werden, was schließlich zu einem statistisch derivatisierten Kondensationsprodukt führt.

Über die Struktur von Substituenten, die über die Derivatisierung in die Kondensationsverbindung eingebracht werden oder die als Reste in den Verbindungen vorliegen, aus denen die Kondensationsverbindungen aufgebaut werden, können im erfindungsgemäßen Verfahren gezielt Eigenschaften in die Kondensationsverbindung eingebracht werden.

Beispielsweise läßt sich durch die chemische Natur dieser Substituenten die Löslichkeit oder das thermische oder rheologische Verhalten der Kondensationsverbindung wie beispielsweise die Plastizität, die Verformbarkeit, die Hitzebeständigkeit oder die Glastemperatur beeinflussen. Ebenso können lineare und nichtlineare optische Eigenschaften wie beispielsweise flüssig-kristalliner Charakter, Chiralität, Brechung, Streuung oder Transparenz in die Kondensationsverbindung eingebracht werden. Denkbar ist auch die gezielte Beeinflussung der Leitfähigkeit der Kondensationsverbindung. Ebenso sind natürlich auch Kombinationen dieser Eigenschaften gezielt steuerbar. Beispielsweise ist es denkbar, nach dem erfindungsgemäßen Verfahren Polykondensationsverbindungen herzustellen, bei denen gezielt die Leitfähigkeit und die mechanische und thermische Stabilität durch geeignete Auswahl, Umsetzung, gegebenenfalls Derivatisierung und/oder Vernetzung, wie untenstehend beschrieben, derjenigen Verbindungen beeinflußt wird, die zum Aufbau der Polykondensationsverbindung eingesetzt werden. Die Substituenten oder Reste können ebenso Indikator- oder Sensoreigenschaften oder auch Farbe, Fluoreszenz oder Radioaktivität in das Kondensationsprodukt einbringen.

Im Rahmen der vorliegenden Erfindung ist es auch denkbar, die gegebenenfalls derivatisierten Kondensationsprodukte in Anwesenheit einer Templatverbindung zu verformen. Als Templatverbindung kann prinzipiell jede Verbindung eingesetzt werden, die sich bei der Herstellung der Kondensationsverbindungen reversibel in die aufzubauende Struktur einlagern läßt.

Demgemäß betrifft die vorliegende Erfindung auch eine Verfahren, wie oben beschrieben, das dadurch gekennzeichnet ist, daß die Kondensationsverbindung in Anwesenheit mindestens einer Templatverbindung verformt wird.

Bei der Verformung geht man beispielsweise so vor, daß man in einem geeigneten Lösungsmittel oder Lösungsmittelgemisch eine Kondensationsverbindung mit einem Templat zusammengibt und der Kondensationsverbindung die Möglichkeit gibt, dabei eine oder mehrere begünstigte Konformationen einzunehmen. Dabei ist auch denkbar, eine Kondensationsverbindung mit zwei oder mehr verschiedenen Templaten zusammenzugeben. Ebenfalls ist es denkbar, zwei oder mehr verschiedene Kondensationsverbindungen mit einem oder mehreren verschiedenen Templaten zusammenzugeben.

Die Wechselwirkungen zwischen der mindestens einen Templatverbindung und der Kondensationsverbindung können von beliebiger Natur sein. Beispielsweise seien genannt:
- Wasserstoffbrückenbindungen;
- Dipol-Dipol-Wechselwirkungen;
- Van der Waals-Wechselwirkungen;
- Hydrophobe Wechselwirkungen;
- Charge-Transfer-Wechselwirkungen;
- Ionische Wechselwirkungen;
- Kombinationen dieser Wechselwirkungen.

Verantwortlich für die Wechselwirkungen können beispielsweise Strukureinheiten der Verbindungen sein, aus denen die Kondensationsverbindungen aufgebaut sind. Diese Struktureinheiten können auch durch Derivatisierung, wie oben beschrieben, in die Kondensationsverbindung eingeführt worden sein. Unter anderem können es funktionelle Gruppen sein, die zum Aufbau der Kondensationsverbindungen nicht verwendet wurden oder die durch Derivatisierung, wie oben beschrieben, nachträglich in die Kondensationsverbindung eingeführt wurden.

In einer weiteren Ausführungsform des erfindungsgemäßen Verfahrens wird der Aufbau der Kondensationsverbindung in Anwesenheit mindestens einer chemischen Verbindung, die nicht in die Kondensationsverbindung eingebaut wird, durchgeführt. Diese mindestens eine chemische Verbindung kann hierbei beispielsweise ein Templat sein.

Demgemäß betrifft die vorliegende Erfindung auch ein Verfahren, wie oben beschrieben, das dadurch gekennzeichnet ist, daß die Kondensationsverbindung in Gegenwart mindestens einer Templatverbindung hergestellt wird.

Dabei ist es unter anderem denkbar, daß die mindestens eine Ternplatverbindung bei der gesamten Herstellung der Kondensationsverbindung anwesend ist. Ebenfalls ist es möglich, die Templatverbindung erst im Laufe des Herstellungsverfahrens zuzugeben.

Im Rahmen der vorliegenden Erfindung ist es auch möglich, die Kondensationsverbindung in Anwesenheit mindestens einer Templatverbindung aufzubauen und die resultierende Konformation in einem weiteren Schritt in Anwesenheit mindestens einer Templatverbindung zu verformen.

In einer weiteren Ausführungsform des erfindungsgemäßen Verfahrens wird die Konformation der Kondensationsverbindung, die sich durch Verformung in Anwesenheit eines Templats oder durch Herstellung der Kondensationsverbindung in Anwesenheit eines Templats gebildet hat, fixiert. Zur Fixierung sind prinzipiell alle denkbaren Verfahren einsetzbar.

Demgemäß betrifft die vorliegende Erfindung auch ein Verfahren, wie oben beschrieben, das dadurch gekennzeichnet ist, daß die aus der Verformung resultierende Konformation fixiert wird.

Insbesondere sind hierbei Temperaturänderung, Lösungsmittelwechsel und Vernetzung zu nennen. Bevorzugt wird die Konformation durch Vernetzung fixiert.

Die Vernetzung kann hierbei beispielsweise dadurch erreicht werden, daß zwei oder mehr Stränge von Kondensationsverbindungen direkt miteinander reagieren. Dies kann dadurch erreicht werden, daß funktionelle Gruppen der Verbindungen, aus denen die Kondensationsverbindung aufgebaut wurde und/oder die durch Derivatisierung eingeführten funktionellen Gruppen so beschaffen sind, daß zwischen diesen Gruppen kovalente und / oder nicht-kovalente Bindungen geknüpft werden können. Ganz allgemein ist es denkbar, daß diese kovalenten und/oder nicht-kovalenten Bindungen zwischen Gruppen ausgebildet werden, die an einer einzigen Kondensationsverbindung hängen, und/oder zwischen Gruppen ausgebildet werden, die an zwei oder mehr Kondensationsverbindungen hängen, so daß durch die Vernetzung zwei oder mehr Kondensationsverbindungen über eine oder mehrere Stellen miteinander verknüpft sein können.

Ebenso ist es auch denkbar, zur Vernetzung ein oder mehrere geeignete Vernetzungsmittel einzusetzen, mit denen, wie vorstehend beschrieben, in kovalenter und/oder nicht-kovalenter Weise Gruppen innerhalb einer Kondensationsverbindung und/oder Gruppen, die an mehreren Strängen von gegebenenfalls unterschiedlichen Kondensationsverbindungen hängen, vernetzt werden können.

Hierbei ist es im Rahmen der vorliegenden Erfindung insbesondere möglich, bereits bei der Herstellung der Kondensationsverbindung und/oder bei der Derivatisierung der Kondensationsverbindung oder der Kondensationszwischenprodukte die chemische Struktur der Kondensationsverbindung im Hinblick auf die spätere Vernetzung zu konzipieren. Insbesondere können beispielsweise die Derivatisierungsreagenzien funktionelle Gruppen aufweisen, die für die kovalente und/oder nicht-kovalente Vernetzung selektiv sind.

Als Vernetzungsreagenzien kommen prinzipiell alle geeigneten, aus dem Stand der Technik bekannten Verbindungen in Betracht. Demgemäß kann die Vernetzung beispielsweise in kovalent-reversibler Weise, in kovalent-irreversibler Weise oder in nicht-kovalenter Weise erfolgen, wobei bei Vernetzung in nicht-kovalenter Weise beispielsweise Vernetzungen über ionische Wechselwirkung oder über Charge-Transfer-Wechselwirkung zu nennen sind.

Als Vernetzungsreagenzien, die zu kovalent-irreversibler Vernetzung führen können, sind unter anderem zwei- oder mehrfach funktionelle Verbindungen wie beispielsweise Diole oder Diamine zu nennen. Dabei werden beispielsweise zweiwertige Vernetzer mit der aktivierten Kondensationsverbindung umgesetzt oder das mindestens zweiwertige aktivierte Vernetzungsreagens mit der nichtaktivierten Kondensationsverbindung. Eine kovalent-reversible Vernetzung kann beispielsweise durch Knüpfen einer Schwefel-Schwefel-Bindung zu einer Disulfidbrücke zwischen zwei an einer oder zwei Kondensationsverbindungen hängenden funktionellen Gruppen realisiert werden. Eine Vernetzung über ionische Wechselwirkung kann beispielsweise über zwei Reste zustandekommen, von denen der eine als Struktureinheit ein quartäres Ammoniumion und der andere als Struktureinheit beispielsweise

―COO⁻ oder ―SO₃⁻

aufweist. Eine Vernetzung über Wasserstoffbrücken kann beispielsweise zwischen zwei komplementären Basenpaaren ausgebildet werden, beispielsweise über folgende Struktur:

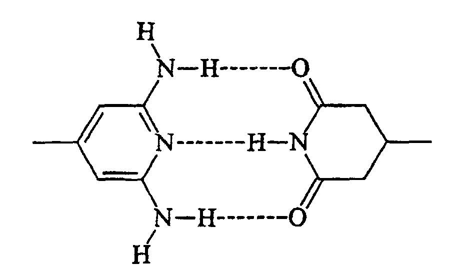

Ganz allgemein können nicht-kovalent zu vernetzende Polymerderivate bezüglich der Vemetzungsstellen komplementär aufgebaut sein, wobei zueinander komplementäre Struktureinheiten beispielsweise Säure / Triamin oder Uracil / Melamin sind. Ebenso kann bei einer nicht-kovalenten Vernetzung das Vernetzungsreagens komplemantär zu den Vernetzungsstellen an der Kondensationsverbindung sein. Als Beispiel hierfür wären etwa eine Amingruppe an der Kondensationsverbindung und eine Dicarbonsäure als Vernetzungsreagens zu nennen.

Mittels der Vernetzung ist es beispielsweise möglich, aus geeigneten Kondensationsprodukten Multischichten aufzubauen. Dies ist beispielsweise dadurch möglich, daß zuerst zweidimensionale Strukturen nach dem erfindungsgemäßen Verfahren aufgebaut werden und diese durch Vernetzung zu Multischichten verbunden werden. Ebenso ist es denkbar, zuerst eindimensionale Strukturen herzustellen, aus denen durch Vernetzung zweidimensionale und anschließend durch Vernetzung dreidimensionale Strukturen hergestellt werden. Ebenso können aus geeigneten eindimensionalen Strukturen direkt durch Vernetzung dreidimensionale Strukturen aufgebaut werden. Ebenso ist eine Kombination dieser Herstellungswege denkbar.

In einer weiteren Ausführungsform betrifft die vorliegende Erfindung auch die Verwendung einer Kondensationsverbindung, herstellbar gemäß einem Verfahren, wie oben beschrieben, oder einer Kondensationsverbindung, herstellbar durch die Verwendung einer Verbindung der Struktur (I) oder (II), wie oben beschrieben, als Vernetzungsreagenz.

Im wesentlichen können durch die erfindungsgemäße Verwendung alle geeigneten Verbindungen vernetzt werden. Geeignete Verbindungen sind dabei solche Verbindungen, die mindestens eine Struktureinheit, beispielsweise eine funktionelle Gruppe, aufweisen, die mit einer Struktureinheit, beispielsweise einer funktionellen Gruppe, der erfindungsgemäß hergestellten Kondensationsverbindung derart wechselwirkt, daß eine Vernetzung stattfindet.

Hierbei ist es unter anderem denkbar, mittels mindestens einer erfindungsgemäß hergestellten Kondensationsverbindung zwei oder mehr Oligomere und/oder Polymere miteinander zu vernetzen. Die Oligomere oder Polymere können hierbei eine ein-, zwei- oder dreidimensionale Struktur aufweisen. Selbstverständlich ist es denkbar, daß mindestens ein zu vernetzendes Oligomer und/oder Polymere eine erfindungsgemäß hergestellte Kondensationsverbindung ist.

Je nach Anzahl der zur Vernetzung geeigneten Struktureinheiten der mindestens einen, als Vernetzungsreagenz verwendeten erfindungsgemäß hergestellten Kondensationsverbindung ist es denkbar, zwei oder mehr gleiche oder voneinander verschiedene Verbindungen miteinander zu vernetzen.

Als Beispiel für ein erfindungsgemäß zu verwendendes Vernetzungsreagenz sei im folgenden ein dimerer Vernetzer aufgeführt, der nach dem erfindungsgemäßen Verfahren aus Phenylalanin und Leucin hergestellt wird:

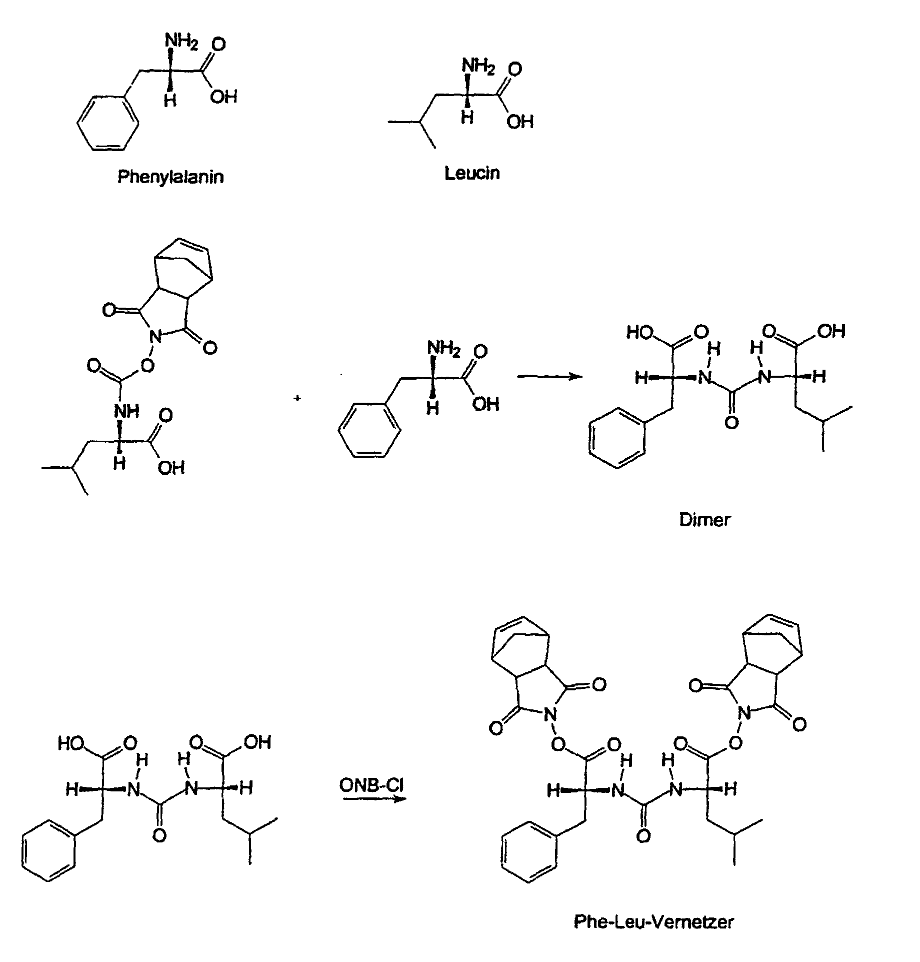

Als Beispiele für den Aufbau einer Kondensationsverbindung nach dem erfindungsgemäßen Verfahrens seien folgende Reaktionswege (A) und (B) aufgeführt, in denen der Rest BNO die folgende Struktureinheit (VIII) repräsentiert:

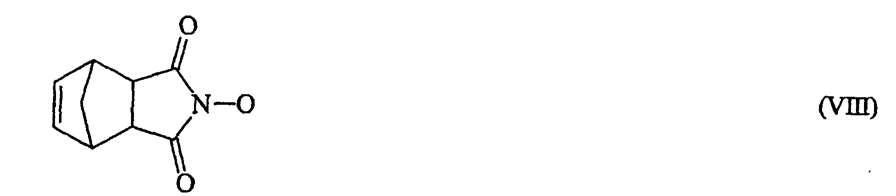

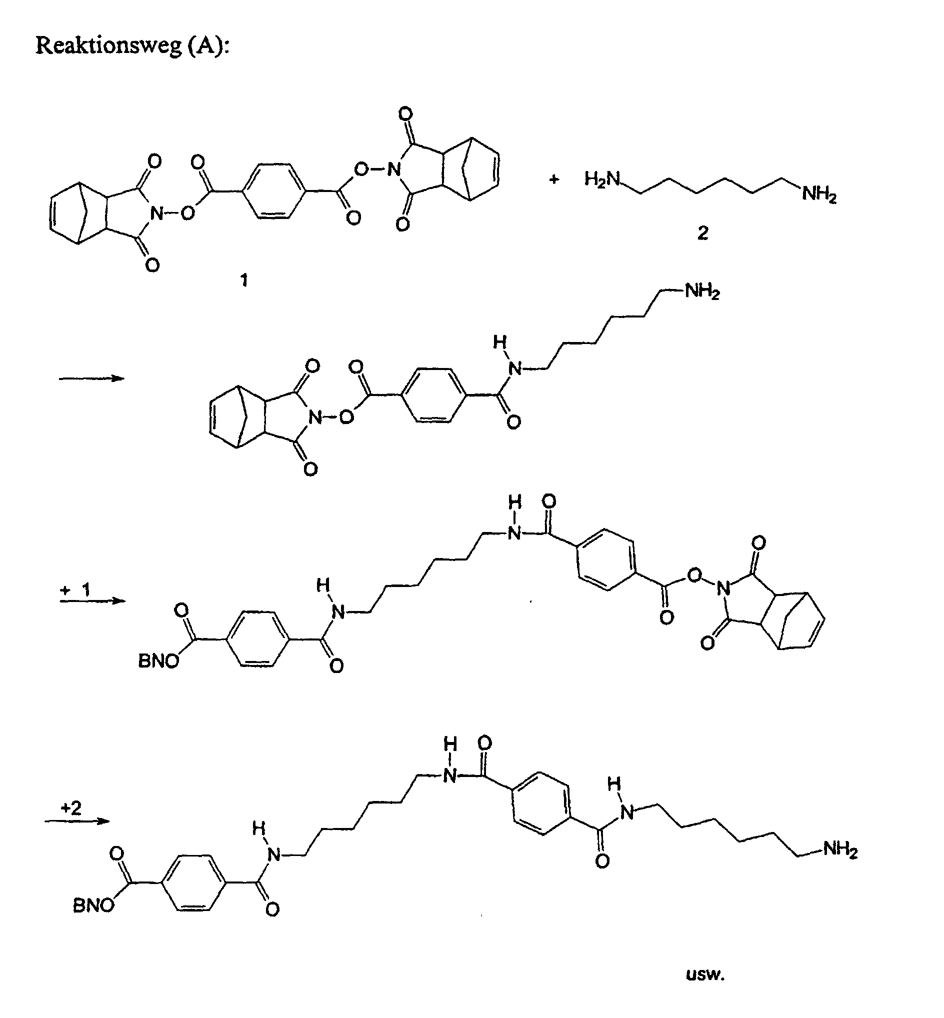

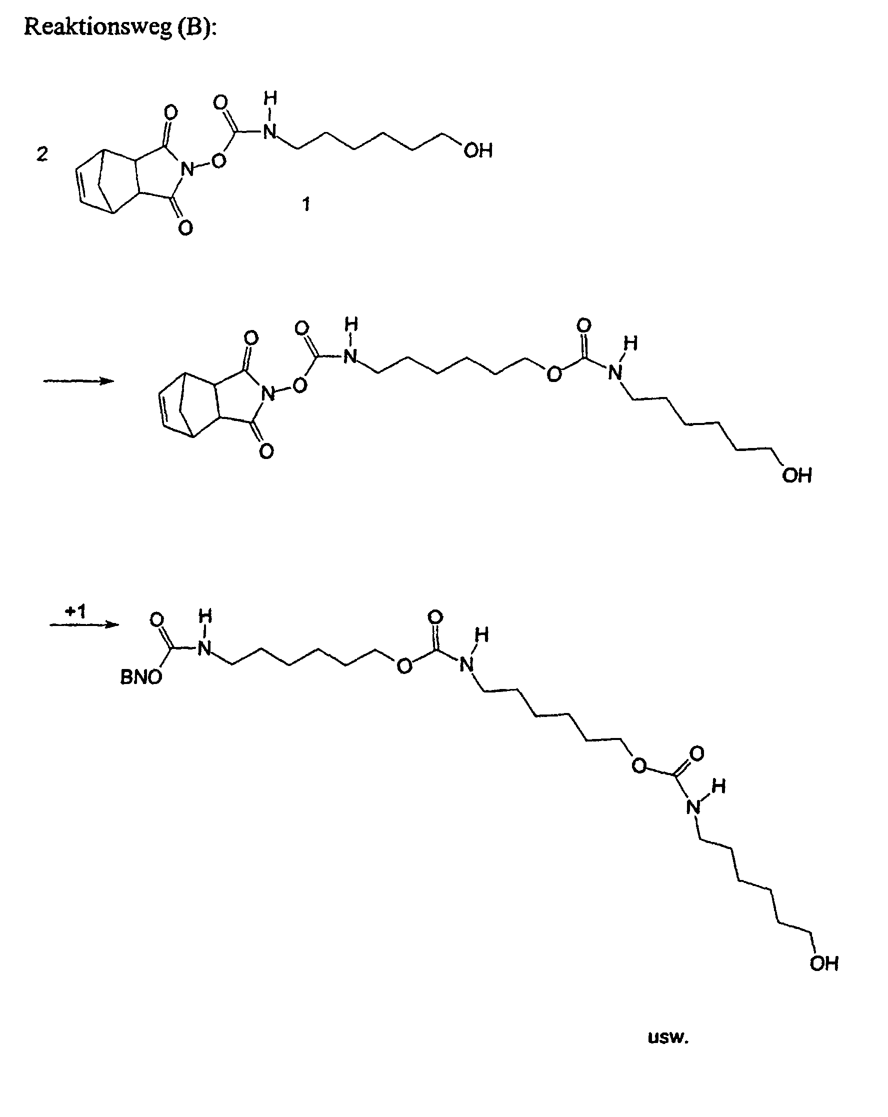

### Beispiele

### Beispiel 1: Polykondensation von Terephthalsäure-bis-(N-hydroxy-5-norbornen-2,3-dicarboximid)ester mit 1,6-Diaminohexan

Zu einer Lösung von 2,44 g (5 mmol) Terephtalsäure-bis-(N-hydroxy-5-norbornen-2,3-dicarboximid)ester in 150 ml Chloroform wurden bei Raumtemperatur innerhalb 1 h eine Lösung von 0,58 g (5 mmol) 1,6-Diaminohexan in 100 ml Chloroform zugetropft. Nachdem ca. 25% der Menge an 1,6-Diaminohexan zugegeben waren, begann sich die Lösung einzutrüben, und es bildete sich ein weißer Niederschlag. Die Reaktionsmischung wurde bei Raumtemperatur gerührt, bis keine Edukte mehr mit DC-Kontrolle nachgewiesen werden konnten. Der Niederschlag wurde über eine Teflonmembran abfiltriert und im Hochvakuum 48 h getrocknet.

### Beispiel 2: Kondensation von Trimesinsäure-tris-(N-hydroxy-5-norbornen-2,3-dicarboximid)ester mit 1,6-Aminohexanol

Zu einer Lösung von 3,95 g (5,7 mmol) Trimesinsäure-tris-(*N*-hydroxy-5-norbornen-2,3-dicarboximid)ester in 100 ml THF wurden bei Raumtemperatur innerhalb von 10 min. eine Lösung von 2,00 g (17,1 mmol) 1,6-Aminohexanol in einem Gemisch von 10 ml THF und 3 ml Ethanol zugetropft. Nach 2 Stunden war die aktivierte Trimesinsäure abreagiert (DC-Kontrolle) und das Lösungsmittel wurde am Rotationsverdampfer entfernt. Der braune Rückstand wurde zur Reinigung und Abtrennung vom gebildeten N-Hydroxy-5-norbornen-2,3-dicarboximid an Kieselgel chromatographiert (Hexan/Essigester).

### Beispiel 3: Herstellung von C6-Diol-bis-ONB

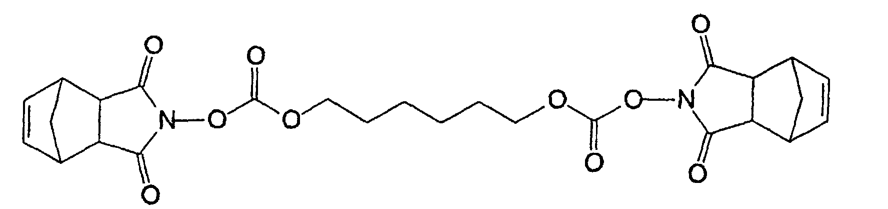

6,03 g (25 mmol) N-(Chlorcarbonyloxy)-5-norbornen-2,3-dicarboximid wurden in 250 ml Tetrahydrofuran gelöst. Bei 10°C wurde eine Lösung von 1,18 g (10 mmol) 1,6-Hexandiol und 1,98 g (25 mmol) Pyridin in 80 ml Tetrahydrofuran innerhalb 1 h zugetropft. Das Gemisch wurde 1 h bei 20 °C und 3 h bei 35 °C gerührt. Das ausgefallene Pyridiniumhydrochlorid wurde abfiltriert und das Tetrahydrofuran am Rotationsverdampfer entfernt. Der Rückstand wurde in 100 ml Dichlormethan aufgenommen und mit 5%iger KHSO₄-Lösung, mit 5%iger NaHCO₃-Lösung und mit destilliertem Wasser geschüttelt. Die organische Phase wurde nach Trocknung über Na₂SO₄ eingeengt und die zurückbleibenden farblosen Kristalle am Hochvakuum getrocknet. Ausbeute: 3,57 g (71,4 %).

### Beispiel 4: Herstellung von C8-Diamino-bis-ONB

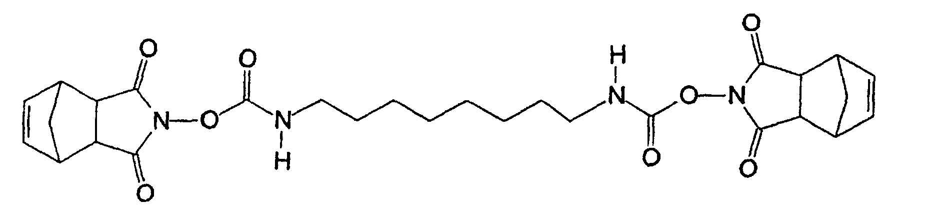

6,02 g (25 mmol) N-(Chlorcarbonyloxy)-5-norbornen-2,3-dicarboximid wurden in 250 ml Dichlormethan gelöst. Bei -15°C wurde eine Lösung von 1,47 g (10 mmol) 1,8-Diaminooctan und 3,03 g (30 mmol) Triethylamin in 100 ml Dichlormethan innerhalb 1 h zugetropft. Das Gemisch wurde 4 h bei -15 °C gerührt. Ein Teil des Produktes fiel als weißer Niederschlag aus und wurde abfiltriert. Die filtrierte Reaktionslösung wurde mit 5%iger KHSO₄-Lösung, mit 5%iger NaHCO₃-Lösung und mit destilliertem Wasser geschüttelt. Die organische Phase wurde nach Trocknung über Na₂SO₄ eingeengt und die zurückbleibenden weißen Kristalle am Hochvakuum getrocknet. Die gesamte Ausbeute aus beiden Fraktionen betrug 4,75 g (85,6 %).

### Beispiel 5: Herstellung von Adipinsäure-bis-ONB

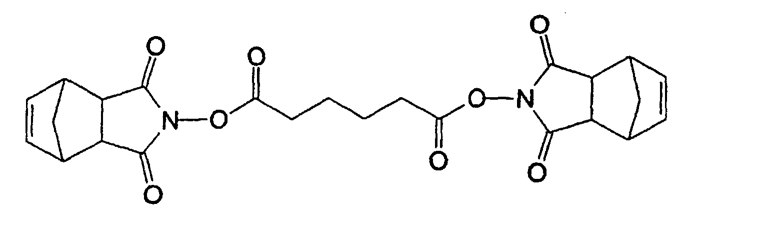

5,30 g (22 mmol) N-(Chlorcarbonyloxy)-5-norbornen-2,3-dicarboximid und 0,24 g (2 mmol) 4-Dimethylaminopyridin wurden in 250 ml Dichlormethan gelöst. Bei 0 °C wurde eine Lösung von 1,46 g (10 mmol) Adipinsäure und 2,22 g (22 mmol) Triethylamin in 50ml Dichlormethan innerhalb 1 h zugetropft. Das Gemisch wurde 1 h bei 0 °C, 1 h bei 20 °C und 2 h bei 35 °C gerührt. Die Reaktionslösung wurde mit 5%iger KHSO₄-Lösung, mit 5%iger NaHCO₃-Lösung und mit destilliertem Wasser geschüttelt. Die organische Phase wurde nach Trocknung über Na₂SO₄ eingeengt und der Rückstand am Hochvakuum getrocknet.

### Beispiel 6: Herstellung von Terephthalsäure-bis-ONB

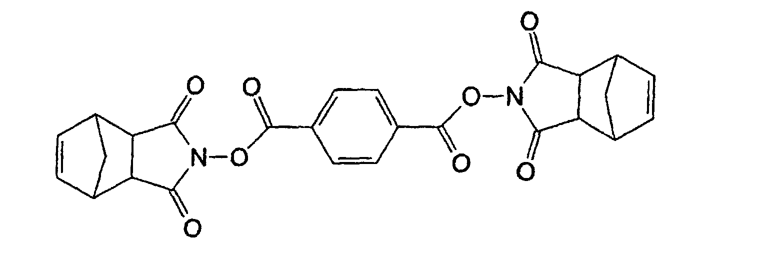

26,51 g (110 mmol) N-(Chlorcarbonyloxy)-5-norbornen-2,3-dicarboximid und 1.22 g (11 mmol) 4-Dimethylaminopyridin wurden in 500 ml Dichlormethan gelöst. Bei 0 °C wurde eine Lösung von 8,30 g (50 mmol) Terephthalsäure und 11,1 g (110 mmol) Triethylamin in 150 ml Dichlormethan innerhalb 2 h zugetropft. Das Gemisch wurde 1 h bei 0 °C, 1 h bei 20 °C und 2 h bei 35 °C gerührt. Zu der entstandenen Suspension wurden 400 ml Dichlormethan gegeben und die nun klare Reaktionslösung wurde mit 5%iger KHSO₄-Lösung, mit 5%iger NaHCO₃-Lösung und mit destilliertem Wasser geschüttelt. Die organische Phase wurde nach Trocknung über Na₂SO₄ eingeengt und der weiße Rückstand am Hochvakuum getrocknet. Ausbeute: 17,15 g (70,2 %).

### Beispiel 7: Herstellung von 1-Amino-6-hexanol-di-ONB

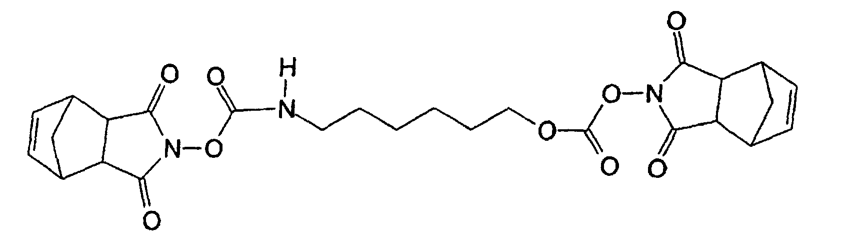

2,65 g (11 mmol) N-(Chlorcarbonyloxy)-5-norbornen-2,3-dicarboximid wurden in 150 ml Dichlormethan gelöst Bei -15 °C wurde eine Lösung von 1,14 g (10 mmol) 1,6-Aminohexanol und 1,31 g (13 mmol) Triethylamin in 40 ml Dichlormethan und 30 ml Chloroform innerhalb 30 min zugetropft. Das Gemisch wurde 3 h bei -15 °C gerührt und überschüssiges N-(Chlorcarbonyloxy)-5-norbornen-2,3-dicarboximid mit 2 ml Wasser hydrolysiert. Die klare Reaktionslösung wurde mit 5%iger KHSO₄-Lösung, mit 5%iger NaHCO₃-Lösung und mit destilliertem Wasser geschüttelt. Die organische Phase wurde nach Trocknung über Na₂SO₄ eingeengt und der farblose gelartige Rückstand am Hochvakuum getrocknet.

### Beispiel 8: Herstellung von 12-Hydroxydodecansäure-di-ONB

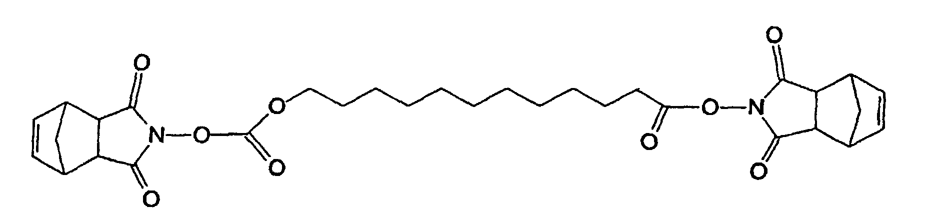

1,08 g (5 mmol) 12-Hydroxydodecansäure und 1,52 g (15 mmol) Triethylamin wurden zusammen mit 0.12 g (1 mmol) 4-Dimethylaminopyridin in 400 ml Dichlormethan gelöst. Bei 0 °C wurden 2.89 g (12 mmol) N-(Chlorcarbonyloxy)-5-norbornen-2,3-dicarboximid innerhalb von 30 min zugetropft. Das Gemisch wurde 1 h bei 0 °C, und 1,5 h bei 15 °C gerührt. Die Reaktionslösung wurde mit eiskalter 5%iger NaHCO₃-Lösung und mit eiskaltem destilliertem Wasser geschüttelt. Die organische Phase wurde nach Trocknung über Na₂SO₄ eingeengt und der Rückstand in Methylenchlorid aufgenommen. Das Produkt wurde mit Hexan wieder ausgefällt und am Hochvakuum getrocknet. Ausbeute: 2,8 g (96,1 %).

### Beispiel 9: Herstellung von Trimesinsäure-tris-ONB

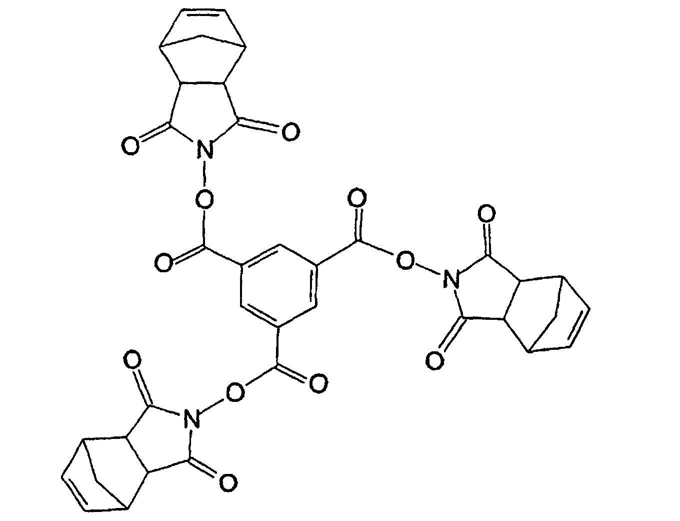

38,56 g (160 mmol) N-(Chlorcarbonyloxy)-5-norbornen-2,3-dicarboximid wurden zusammen mit 0,61 g (5 mmol) 4-Dimethylaminopyridin in 400 ml Dichlormethan gelöst. Bei 0 °C wurde eine Lösung von 10,50 g (50 mmol) Trimesinsäure (1,3,5-Benzoltricarbonsäure) und 16,16 g (160 mmol) Triethylamin in 150 ml Dichlormethan innerhalb 30 min zugetropft. Das Gemisch wurde 1 h bei 0°C, 1 h bei 20°C und 2 h bei 35°C gerührt. Dabei kam es zur CO₂-Entwicklung. Die Reaktionslösung wurde mit 5%iger KHSO₄-Lösung, mit 5%iger NaHCO₃-Lösung und mit destilliertem Wasser geschüttelt. Die organische Phase wurde nach Trocknung über Na₂SO₄ eingeengt und die zurückbleibenden farblosen Kristalle am Hochvakuum getrocknet. Ausbeute: 26,8g (77,3%).

### Beispiel 10: Selektive Mono-Umsetzung von 1-Amino-6-hexanol-di-ONB mit Isobutylamin

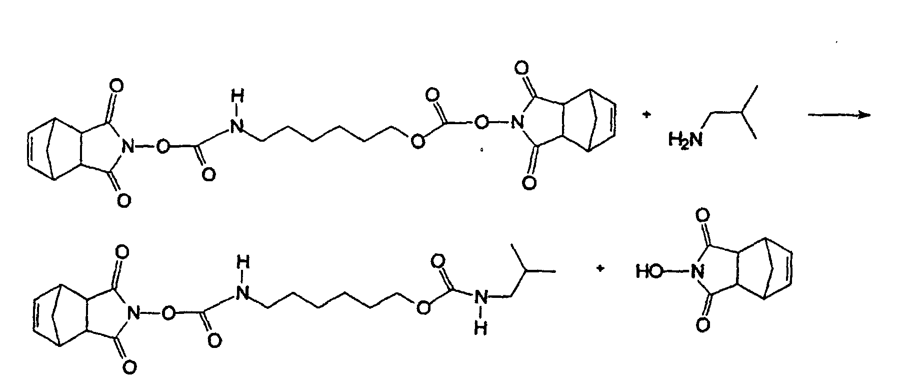

0,53 g (1,0 mmol) 1-Amino-6-hexanol-di-ONB wurden in 20 ml Dichlormethan gelöst. Bei Raumtemperatur wurden 0.07 g (1,0 mmol) Isobutylamin rasch zugetropft. Das Gemisch wurde 90 min bei Raumtemperatur gerührt. Ohne Beschränkung auf die Theorie, wird derzeit angenommen, daß das Isobutylamin dabei selektiv mit der aktivierten Alkoholfunktion reagiert. Die Reaktionslösung wurde mit 5%iger KHSO₄-Lösung, mit 5%iger NaHCO₃-Lösung, und mit destilliertem Wasser geschüttelt. Die organische Phase wurde nach Trocknung über Mg₂SO₄ eingeengt und der farblose gelartige Rückstand am Hochvakuum getrocknet. Ausbeute: 0,30 g (71,2 %).

### 6-{[(Isobutylamino)carbouyl]amino}hexyl-isobutylcarbamat

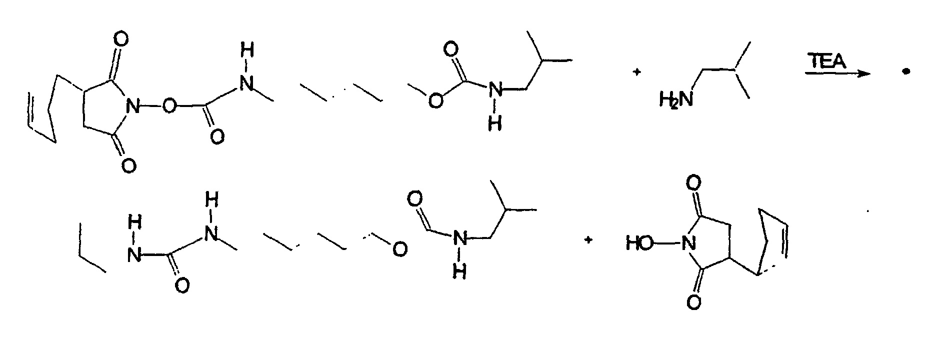

0,20 g (0,47 mmol) des, wie oben beschrieben, erhaltenen Mono-Umsetzungsproduktes wurden in 15 ml Dichlormethan gelöst und 0,04 g (0,57 mmol) Triethylamin zugegeben. In Anwesenheit von Triethylamin reagiert die aktivierte Aminfunktion innerhalb 60 min ab. Die Reaktionslösung wurde mit 5%iger KHSO₄-Lösung, mit 5%iger NaHCO₃-Lösung, und mit destilliertem Wasser geschüttelt. Die organische Phase wurde nach Trocknung über Mg₂SO₄ eingeengt und die farblosen Kristalle am Hochvakuum getrocknet. Ausbeute: 0,10 g (67,5 %).

## Patentansprüche

1. Verfahren zur Herstellung einer Kondensationsverbindung durch Umsetzung mindestens einer funktionellen Gruppe einer mindestens zwei funktionelle Gruppen aufweisenden ersten niedermolekularen Verbindung mit mindestens einer funktionellen Gruppe mindestens einer weiteren, mindestens zwei funktionelle Gruppen aufweisenden zweiten niedermolekularen Verbindung, die gleich der ersten oder verschieden von der ersten niedermolekularen Verbindung sein kann, unter Erhalt einer Kondensationsverbindung, **dadurch gekennzeichnet, daß** mindestens eine der an dieser Umsetzung beteiligten funktionellen Gruppen vor der Umsetzung durch Reaktion mit einer Verbindung der folgenden Struktur (I) 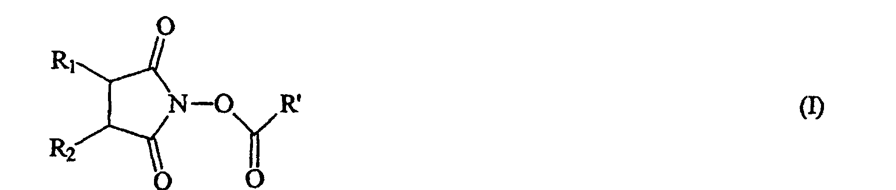 aktiviert wurde, wobei R' für ein Halogenatom oder einen Rest (I') 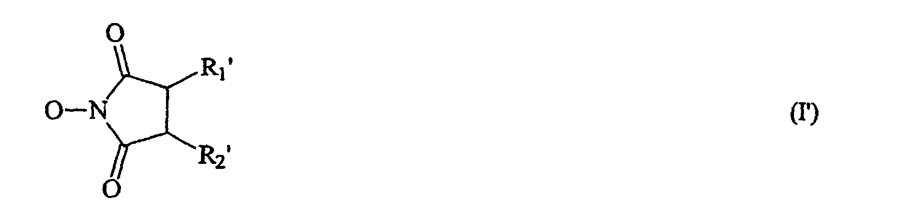 steht und wobei R₁, R₂, R₁' und R₂' gleich oder unterschiedlich sind und Wasserstoff, geradkettige oder verzweigtkettige Alkyl-, Aryl-, Cycloalkyl-, heterocyclische oder Aralkylreste mit bis zu 30 C-Atomen darstellen oder entweder R₁ und R₂ oder R₁' und R₂' oder sowohl R₁ und R₂ als auch R₁' und R₂' zu einem Carbocyclus oder einem Heterocyclus verknüpft sind.

2. Verfahren nach Anspruch 1, **dadurch gekennzeichnet, daß** als Verbindung der Struktur (I) eine Verbindung der folgenden Struktur (II) 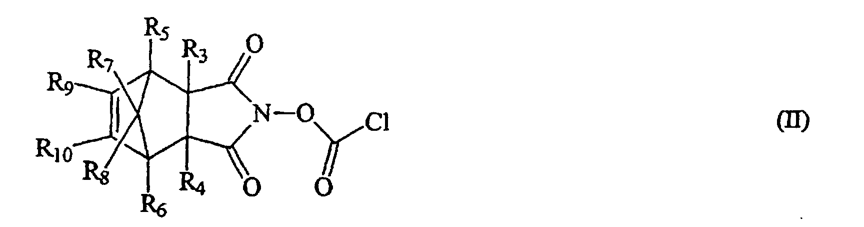 eingesetzt wird, wobei R₃ bis R₁₀ gleich oder unterschiedlich sind und Wasserstoff, geradkettige oder verzweigtkettige Alkyl-, Aryl-, Cycloalkyl-, heterocyclische und Aralkyl-Reste mit bis zu 30 C-Atomen darstellen oder mehrere der R₃ bis R₁₀ zu einem oder mehreren Carbo- oder Heterocyclen verbrückt sind.

3. Verfahren nach Anspruch 1 oder 2, **dadurch gekennzeichnet, daß** mindestens eine der mindestens zwei funktionelle Gruppen aufweisenden Verbindungen mindestens zwei verschiedene funktionelle Gruppen aufweist.

4. Verfahren nach Anspruch 3, **dadurch gekennzeichnet, daß** mindestens eine der mindestens zwei verschiedenen funktionellen Gruppen der mindestens einen, mindestens zwei funktionelle Gruppen aufweisenden Verbindungen selektiv durch eine Verbindung der Struktur (I) oder (II) aktiviert wurde.

5. Verfahren nach einem der Ansprüche 1 bis 4, **dadurch gekennzeichnet, daß** die Kondensationsverbindung durch gleichzeitiges Abreagieren der mindestens zwei funktionelle Gruppen aufweisenden Verbindungen hergestellt wird.

6. Verfahren nach einem der Ansprüche 1 bis 4, **dadurch gekennzeichnet, daß** die Kondensationsverbindung schrittweise aus den mindestens zwei funktionelle Gruppen aufweisenden Verbindungen aufgebaut wird.

7. Verfahren nach Anspruch 6, **dadurch gekennzeichnet, daß** die schrittweise Herstellung der Kondensationsverbindung in Lösung oder am festen Träger durchgeführt wird.

8. Verfahren nach einem der Ansprüche 1 bis 7, **dadurch gekennzeichnet, daß** die Umsetzung der mindestens zwei funktionelle Gruppen aufweisenden Verbindungen bei einem pH-Wert im Bereich von 3 bis 14 und einer Temperatur im Bereich von -30 °C bis +50 °C durchgeführt werden.

9. Verfahren nach einem der Ansprüche 1 bis 8, **dadurch gekennzeichnet, daß** es bei Temperaturen im Bereich von -10 °C bis +50 °C in mindestens einem wäßrigen Lösungsmittelgemisch durchgeführt wird.

10. Verfahren nach einem der Ansprüche 1 bis 9, **dadurch gekennzeichnet, daß** die Kondensationsverbindung in Anwesenheit mindestens einer Templatverbindung hergestellt wird.

11. Verfahren nach einem der Ansprüche 1 bis 10, **dadurch gekennzeichnet, daß** die Kondensationsverbindung in Gegenwart mindestens einer Templatverbindung verformt wird.

12. Verfahren nach Anspruch 10 oder 11, **dadurch gekennzeichnet, daß** die aus der Herstellung oder der Verformung resultierende Konformation fixiert wird.

13. Verwendung einer Verbindung der folgenden Struktur (I) 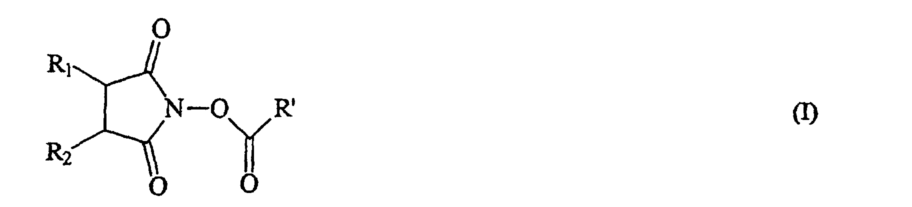 wobei R' für ein Halogenatom oder einen Rest (I') 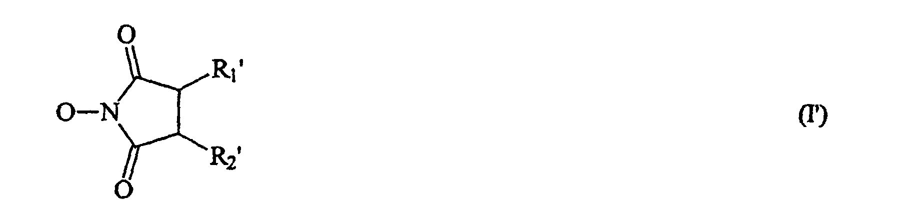 steht und wobei R₁, R₂, R₁' und R₂' gleich oder unterschiedlich sind und Wasserstoff, geradkettige oder verzweigtkettige Alkyl-, Aryl-, Cycloalkyl-, heterocyclische oder Aralkylreste mit bis zu 30 C-Atomen darstellen oder entweder R₁ und R₂ oder R₁' und R₂' oder sowohl R₁ und R₂ als auch R₁' und R₂' zu einem Carbocyclus oder einem Heterocyclus verknüpft sind, oder einer Verbindung der folgenden Struktur (II) 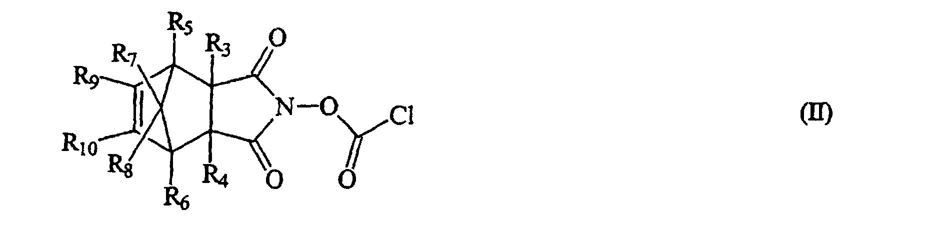 wobei R₃ bis R₁₀ gleich oder unterschiedlich sind und Wasserstoff, geradkettige oder verzweigtkettige Alkyl-, Aryl-, Cycloalkyl-, heterocyclische und Aralkyl-Reste mit bis zu 30 C-Atomen darstellen oder mehrere der R₃ bis R₁₀ zu einem oder mehreren Carbo- oder Heterocyclen verbrückt sind, zur Herstellung von ein-, zwei- und/oder dreidimensionalen Kondensationsverbindungen.

14. Verwendung nach Anspruch 13, **dadurch gekennzeichnet, daß** die ein-, zwei- und/oder dreidimensionalen Kondensationsverbindungen durch Knüpfung von Ester-, Amid-, Carbonat-, Hydrazid-, Urethan- oder Harnstoffbindungen sowie den Thioanalogen oder Stickstoffhomologen dieser Verbindungen gebildet werden.

15. Verwendung nach Anspruch 13 oder 14, **dadurch gekennzeichnet, daß** es sich bei den Kondensationsverbindungen um Sternpolymere, Dendrimere oder Dendrone handelt.

16. Verwendung einer Kondensationsverbindung, herstellbar durch ein Verfahren gemäß einem der Ansprüche 1 bis 12, oder einer Kondensationsverbindung, herstellbar durch die Verwendung einer Verbindung der Struktur (I) oder (II) gemäß einem der Ansprüche 13 bis 15, als Vernetzungsreagenz.

## Claims

1. Method for producing a condensation compound by the conversion of at least one functional group of a first low-molecular compound containing at least two functional groups, with at least one functional group of at least one other second low-molecular compound containing at least two functional groups which can be the same as or different from the first low-molecular compound, obtaining a condensation compound, **characterised in that** at least one of the functional groups taking part in this conversion was activated prior to conversion by reaction with a compound having the following structure (I), 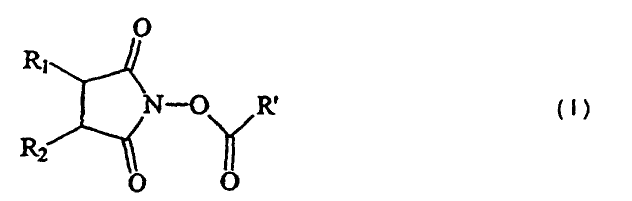 where R' represents a halogen atom or a residue group (I') 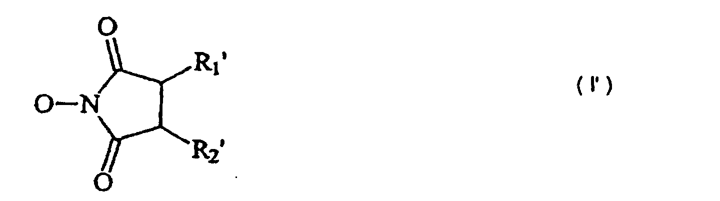 and where R₁, R₂, R₁' and R₂' are the same or different, and represent hydrogen or straight-chain or branched-chain alkyl, aryl, cycloalkyl, heterocyclic or alkyl aryl residue groups with up to 30 C atoms, or where either R₁ and R₂ or R₁' and R₂', or both R₁ and R₂ and also R₁' and R₂', are bonded to form a carbocyclic compound or a heterocyclic compound.

2. Method as in Claim 1, **characterised in that** the compound with the structure (I) that is used is a compound with the following structure (II), 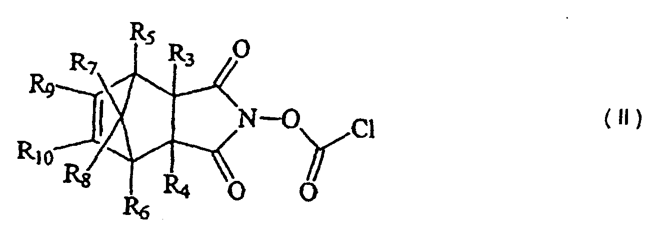 where R₃ to R₁₀ are the same or different, and represent hydrogen, straight-chain or branched-chain alkyl, aryl, cycloalkyl, heterocyclic and alkyl aryl residues with up to 30 C atoms, or several of R₃ to R₁₀ are bridged to form one or more carbocyclic or heterocyclic compounds.

3. Method as in Claim 1 or 2, **characterised in that** at least one of the compounds containing at least two functional groups contains at least two different functional groups.

4. Method as in Claim 3, **characterised in that** at least one of the at least two different functional groups of the at least one compound containing at least two functional groups was activated selectively by a compound of the structure (I) or (II).

5. Method as in one of Claims 1 to 4, **characterised in that** the condensation compound is produced by the simultaneous abreaction of the compounds containing at least two functional groups.

6. Method as in one of Claims 1 to 4, **characterised in that** the condensation compound is synthesised in stages from the compounds containing at least two functional groups.

7. Method as in Claim 6, **characterised in that** the production in stages of the condensation compound is carried out in solution or on a stable carrier.

8. Method as in one of Claims 1 to 7, **characterised in that** the conversion of the compounds containing at least two functional groups is carried out at a pH value in the range of 3 to 14, and at a temperature in the range of -30 °C to +50 °C.

9. Method as in one of Claims 1 to 8, **characterised in that** it is carried out at temperatures in the range between -10 °C to +50 °C in at least one water-based solvent mixture.

10. Method as in one of Claims 1 to 9, **characterised in that** the condensation compound is produced in the presence of at least one template compound.

11. Method as in one of Claims 1 to 10, **characterised in that** the condensation compound is changed in form in the presence of at least one template compound.

12. Method as in Claim 10 or 11, **characterised in that** the conformation resulting from the production or the change in form is fixed.

13. Use of a compound of the following structure (I), 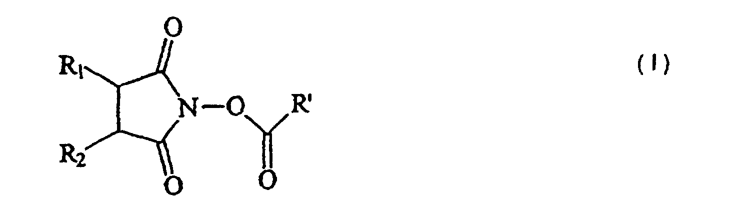 where R' is a halogen atom or a residue group (I') 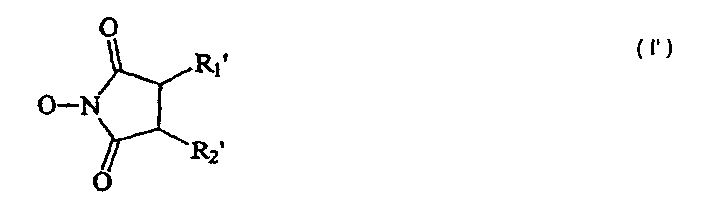 and where R₁, R₂, R₁' and R₂' are the same or different, and represent hydrogen or straight-chain or branched-chain alkyl, aryl, cycloalkyl, heterocyclic or alkyl aryl residue groups with up to 30 C atoms, or where either R₁ and R₂ or R₁' and R₂', or both R₁ and R₂ and also R₁' and R₂', are bonded to form a carbocyclic compound or a heterocyclic compound, or of a compound of the following structure (II), 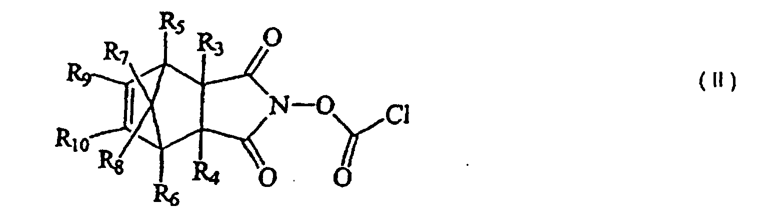 where R₃ to R₁₀ are the same or different, and represent hydrogen, straight-chain or branched-chain alkyl, aryl, cycloalkyl, heterocyclic and alkyl aryl residues with up to 30 C atoms, or several of R₃ to R₁₀ are bridged to form one or more carbocyclic or heterocyclic compounds, for the production of one-, two- and/or three-dimensional condensation compounds.

14. Use as in Claim 13, **characterised in that** the one-, two- and/or three-dimensional condensation compounds are formed by the formation of ester, amide, carbonate, hydrazide, urethane or urea bonds and of the thio analogues or nitrogen homologues of these compounds.

15. Use as in Claim 13 or 14, **characterised in that** the condensation compounds are star polymers, dendrimers or dendrons.

16. Use of a condensation compound produced by a method in accordance with one of Claims 1 to 12, or of a condensation compound produced by the use of a compound of the structure (I) or (II) in accordance with one of Claims 13 to 15, as a crosslinking reagent.

## Revendications

1. Procédé de préparation d'un composé de condensation par réaction d'au moins un groupe fonctionnel d'un premier composé à faible masse moléculaire comportant au moins deux groupes fonctionnels, avec au moins un groupe fonctionnel d'au moins un autre deuxième composé à faible masse moléculaire comportant au moins deux groupes fonctionnels, qui peut être identique au premier ou être différent du premier composé à faible masse moléculaire, avec obtention d'un composé de condensation, **caractérisé en ce qu'**au moins l'un des groupes fonctionnels, participant à cette réaction, a été activé avec un composé ayant la structure (I) ci-après 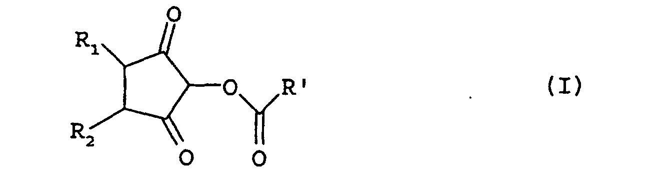 dans laquelle R' est un atome d'halogène ou un radical (I') 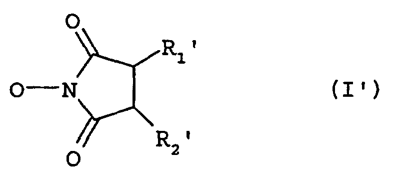 et où R₁, R₂, R₁' et R₂' sont identiques ou différents et représentent chacun un atome d'hydrogène, un radical alkyle à chaîne droite ou ramifiée, aryle, cycloalkyle, hétérocyclique ou aralkyle ayant jusqu'à 30 atomes de carbone, ou encore R₁ et R₂, ou R₁' et R₂', ou tant R₁ et R₂ que R₁' et R₂', sont liés l'un à l'autre pour former un radical carbocyclique ou hétérocyclique.

2. Procédé selon la revendication 1, **caractérisé en ce qu'**on utilise en tant que composé de structure (I) un composé ayant la structure (II) ci-après 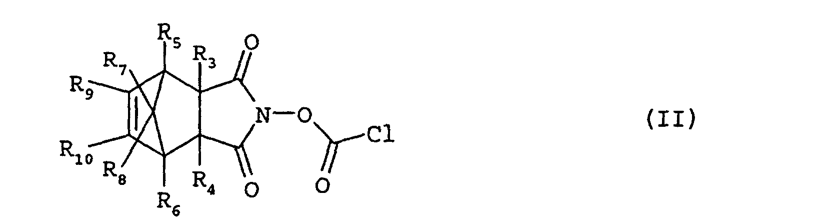 dans laquelle R₃ à R₁₀ sont identiques ou différents et représentent chacun un atome d'hydrogène, un radical alkyle à chaîne droite ou ramifiée, aryle, cycloalkyle, hétérocyclique ou aralkyle ayant jusqu'à 30 atomes de carbone, ou encore plusieurs des radicaux R₃ à R₁₀ sont pontés pour former un ou plusieurs radicaux carbocycliques ou hétérocycliques.

3. Procédé selon la revendication 1 ou 2, **caractérisé en ce qu'**au moins l'un des composés comportant au moins deux groupes fonctionnels comporte au moins deux groupes fonctionnels différents.

4. Procédé selon la revendication 3, **caractérisé en ce qu'**au moins l'un des au moins deux groupes fonctionnels différents des au moins un composé comportant au moins deux groupes fonctionnels, sont soumis à une activation sélective par un composé de structure (I) ou (II).

5. Procédé selon l'une des revendications 1 à 4, **caractérisé en ce que** le composé de condensation est préparé par réaction simultanée des composés comportant au moins deux groupes fonctionnels.

6. Procédé selon l'une des revendications 1 à 4, **caractérisé en ce que** le composé de condensation est réalisé pas à pas à partir des composés comportant au moins deux groupes fonctionnels.

7. Procédé selon la revendication 6, **caractérisé en ce que** la préparation pas à pas du composé de condensation est mise en oeuvre en solution ou sur un support solide.

8. Procédé selon l'une des revendications 1 à 7, **caractérisé en ce que** la réaction des composés comportant au moins deux groupes fonctionnels est mise en oeuvre à un pH compris dans la plage de 3 à 14 et à une température comprise dans la plage de -30 à +50°C.

9. Procédé selon l'une des revendications 1 à 8, **caractérisé en ce qu'**il est mis en oeuvre à des températures comprises dans la plage de -10 à +50°C dans au moins un mélange de solvants aqueux.

10. Procédé selon l'une des revendications 1 à 9, **caractérisé en ce que** le composé de condensation est préparé en présence d'au moins un composé gabarit.

11. Procédé selon l'une des revendications 1 à 10, **caractérisé en ce que** le composé de condensation est façonné en présence d'au moins un composé gabarit.

12. Procédé selon la revendication 10 ou 11, **caractérisé en ce que** la conformation résultant de la préparation ou du façonnage a subi une fixation.

13. Utilisation d'un composé ayant la structure (I) ci-après 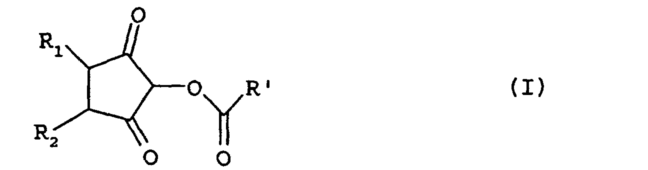 dans laquelle R' est un atome d'halogène ou un radical (I') 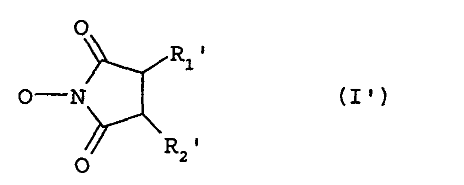 et où R₁, R₂, R₁' et R₂' sont identiques ou différents et représentent chacun un atome d'hydrogène, un radical alkyle à chaîne droite ou ramifiée, aryle, cycloalkyle, hétérocyclique ou aralkyle ayant jusqu'à 30 atomes de carbone, ou encore R₁ et R₂, ou R₁' et R₂', ou tant R₁ et R₂ que R₁' et R₂', sont liés l'un à l'autre pour former un radical carbocyclique ou hétérocyclique, ou d'un composé ayant la structure (II) ci-après 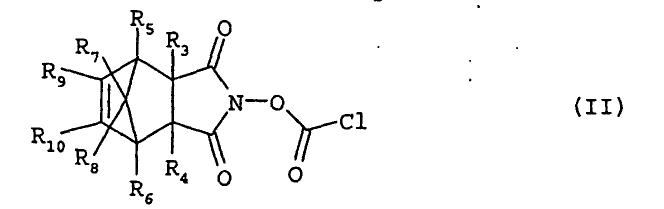 dans laquelle R₃ à R₁₀ sont identiques ou différents et représentent chacun un atome d'hydrogène, un radical alkyle à chaîne droite ou ramifiée, aryle, cycloalkyle, hétérocyclique ou aralkyle ayant jusqu'à 30 atomes de carbone, ou encore plusieurs des radicaux R₃ à R₁₀ sont pontés pour former un ou plusieurs radicaux carbocycliques ou hétérocycliques,. pour préparer des composés de condensation mono-, di- et/ou tridimensionnels.

14. Utilisation selon la revendication 13, **caractérisée en ce que** les composés de condensation mono-, di- et/ou tridimensionnels sont formés par réunion de liaisons ester, amide, carbonate, hydrazide, uréthanne ou urée, ainsi que des analogues thio ou des analogues azotés de ces composés.

15. Utilisation selon la revendication 13 ou 14, **caractérisée en ce que**, pour ce qui concerne les composés de condensation, il s'agit de polymères en étoile, de dendrimères ou de dendrones.

16. Utilisation d'un composé de condensation pouvant être préparé par un procédé selon l'une des revendications 1 à 12, ou d'un composé pouvant être préparé par utilisation d'un composé ayant la structure (I) ou (II) selon l'une des revendications 13 à 15, en tant que réactif de réticulation.
